(19) Europäisches Patentamt
European Patent Office
Office européen des brevets

(11) **EP 4 478 093 A1**

(12) **EUROPEAN PATENT APPLICATION**

(43) Date of publication:
**18.12.2024 Bulletin 2024/51**

(21) Application number: **24182211.3**

(22) Date of filing: **14.06.2024**

(51) International Patent Classification (IPC):
**G01V 1/28** *(2006.01)* **G01V 1/36** *(2006.01)*

(52) Cooperative Patent Classification (CPC):
**G01V 1/282; G01V 1/36;** G01V 2210/50;
G01V 2210/614; G01V 2210/67

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.06.2023 US 202363508316 P**

(71) Applicants:
• **Services Pétroliers Schlumberger
75007 Paris (FR)**
Designated Contracting States:
**FR**
• **GeoQuest Systems B.V.
2514 JG The Hague (NL)**
Designated Contracting States:
**AL AT BE BG CH CY CZ DE DK EE ES FI GB GR
HR HU IE IS IT LI LT LU LV MC ME MK MT NL NO
PL PT RO RS SE SI SK SM TR**

(72) Inventors:
• **RICKETT, James
Crawley, CB3 0EL (GB)**
• **FLETCHER, Robin
Crawley, RH10 9BU (GB)**
• **HOBRO, James
Crawley, CB3 0EL (GB)**

(74) Representative: **Schlumberger Intellectual
Property Department
Parkstraat 83
2514 JG Den Haag (NL)**

(54) **SEISMIC IMAGING FRAMEWORK**

(57) A method can include receiving seismic data, where, in the seismic data, seismic energy reflections represent events associated with structures in a subsurface geologic environment; performing reference wavefield simulations of a reference wavefield, based on a reference model of the subsurface geologic environment for traveltimes of the events; for each time-step of the reference wavefield simulations, passing a reference wavefield simulation result to a correction term simulation that utilizes a limited number of time-steps to generate a correction term simulation result; after the limited number of time-steps, passing the correction term simulation result to a summed-correction wavefield simulation to generate a summed-correction wavefield result; generating a corrected wavefield as a sum of a final reference wavefield simulation result and a final summed-correction wavefield simulation result; and outputting a seismic image based on the corrected seismic wavefield, where the corrected seismic wavefield improves accuracy of the structures in the subsurface.

Fig. 14

**Description**

RELATED APPLICATIONS

This application claims priority to and the benefit of a US Provisional Application having Serial No. 63/508,316, filed 15 June 2023, which is incorporated by reference herein in its entirety.

BACKGROUND

Reflection seismology finds use in geophysics to estimate properties of subsurface formations. Reflection seismology may provide seismic data representing waves of elastic energy as transmitted by P-waves and S-waves, in a frequency range of approximately 1 Hz to approximately 100 Hz. In various instances, seismic data can also represent refractions and/or diving waves. Seismic data may be processed and interpreted to understand better composition, fluid content, extent and geometry of subsurface rocks. For example, a full-waveform inversion (FWI) may be implemented as part of a seismic data workflow for building a model of a subsurface environment where information from reflections, refractions and/or diving waves may be considered.

SUMMARY

A method can include receiving seismic data from a seismic survey of a subsurface geologic environment, where, in the seismic data, seismic energy reflections represent events associated with structures in the subsurface geologic environment; performing reference wavefield simulations of a reference wavefield, based on a reference model of the subsurface geologic environment for traveltimes of the events; for each time-step of the reference wavefield simulations, passing a reference wavefield simulation result to a correction term simulation that utilizes a limited number of time-steps to generate a correction term simulation result; after the limited number of time-steps, passing the correction term simulation result to a summed-correction wavefield simulation to generate a summed-correction wavefield result; generating a corrected wavefield as a sum of a final reference wavefield simulation result and a final summed-correction wavefield simulation result; and outputting a seismic image based on the corrected seismic wavefield, where the corrected seismic wavefield improves accuracy of the structures in the subsurface geologic environment. A system can include a processor; memory operatively coupled to the processor; and processor-executable instructions stored in the memory to instruct the system to: receive seismic data from a seismic survey of a subsurface geologic environment, where, in the seismic data, seismic energy reflections represent events associated with structures in the subsurface geologic environment; perform reference wavefield simulations of a reference wavefield, based on a reference model of the subsurface geologic environment for traveltimes of the events; for each time-step of the reference wavefield simulations, pass a reference wavefield simulation result to a correction term simulation that utilizes a limited number of time-steps to generate a correction term simulation result; after the limited number of time-steps, pass the correction term simulation result to a summed-correction wavefield simulation to generate a summed-correction wavefield result; generate a corrected wavefield as a sum of a final reference wavefield simulation result and a final summed-correction wavefield simulation result; and output a seismic image based on the corrected seismic wavefield, where the corrected seismic wavefield improves accuracy of the structures in the subsurface geologic environment. One or more computer-readable storage media can include computer-executable instructions executable to instruct a computing system to: receive seismic data from a seismic survey of a subsurface geologic environment, where, in the seismic data, seismic energy reflections represent events associated with structures in the subsurface geologic environment; perform reference wavefield simulations of a reference wavefield, based on a reference model of the subsurface geologic environment for traveltimes of the events; for each time-step of the reference wavefield simulations, pass a reference wavefield simulation result to a correction term simulation that utilizes a limited number of time-steps to generate a correction term simulation result; after the limited number of time-steps, pass the correction term simulation result to a summed-correction wavefield simulation to generate a summed-correction wavefield result; generate a corrected wavefield as a sum of a final reference wavefield simulation result and a final summed-correction wavefield simulation result; and output a seismic image based on the corrected seismic wavefield, where the corrected seismic wavefield improves accuracy of the structures in the subsurface geologic environment. Various other examples of methods, systems, devices, etc., are also disclosed.

This summary is provided to introduce a selection of concepts that are further described below in the detailed description. This summary is not intended to identify key or essential features of the claimed subject matter, nor is it intended to be used as an aid in limiting the scope of the claimed subject matter.

BRIEF DESCRIPTION OF THE DRAWINGS

Features and advantages of the described implementations can be more readily understood by reference to the following description taken in conjunction with the accompanying drawings.

Fig. 1 illustrates an example of a geologic environment;
Fig. 2 illustrates examples of survey techniques;
Fig. 3 illustrates examples of survey techniques;
Fig. 4 illustrates examples of survey techniques;
Fig. 5 illustrates an example of forward modeling and an example of inversion;
Fig. 6 illustrates an example of a full-waveform inversion method;
Fig. 7 illustrates an example of a method and an example of a computing system;
Fig. 8 illustrates an examples of graphics;
Fig. 9 illustrates examples of models;
Fig. 10 illustrates example seismic images;
Fig. 11 illustrates example seismic images;
Fig. 12 illustrates examples of models;

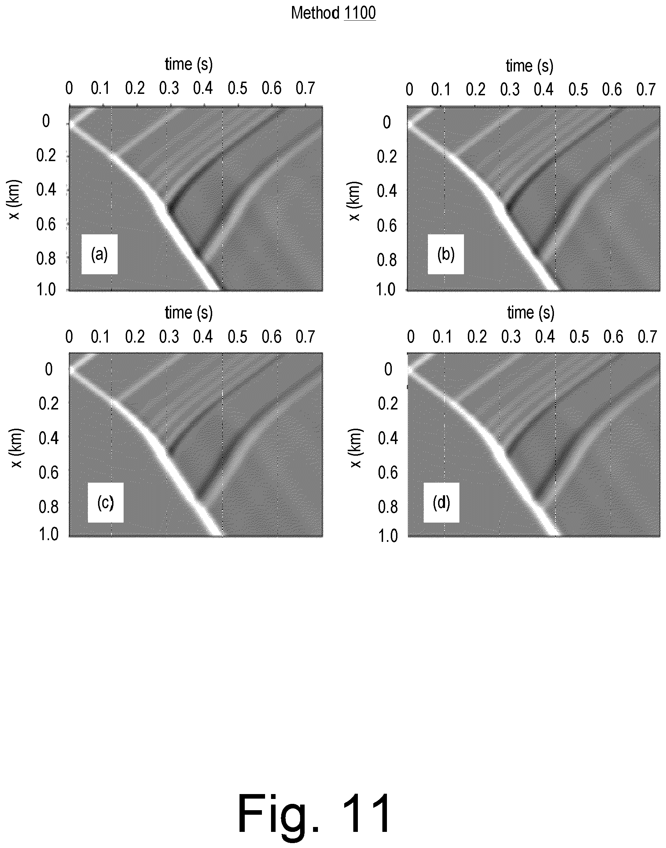

Fig. 11 illustrates example seismic images;

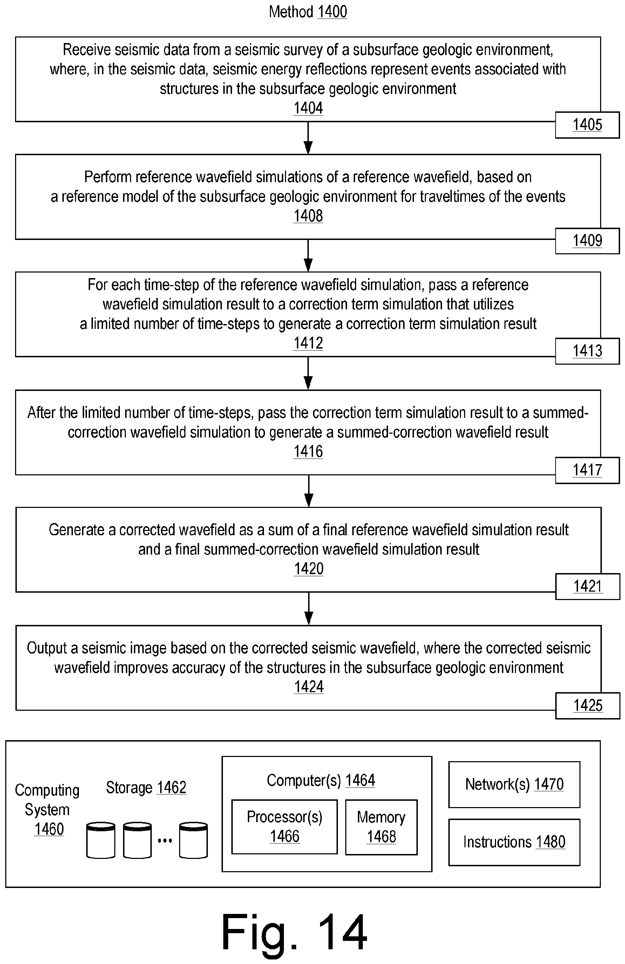

Fig. 14 illustrates an example of a method and an example of a computing system;

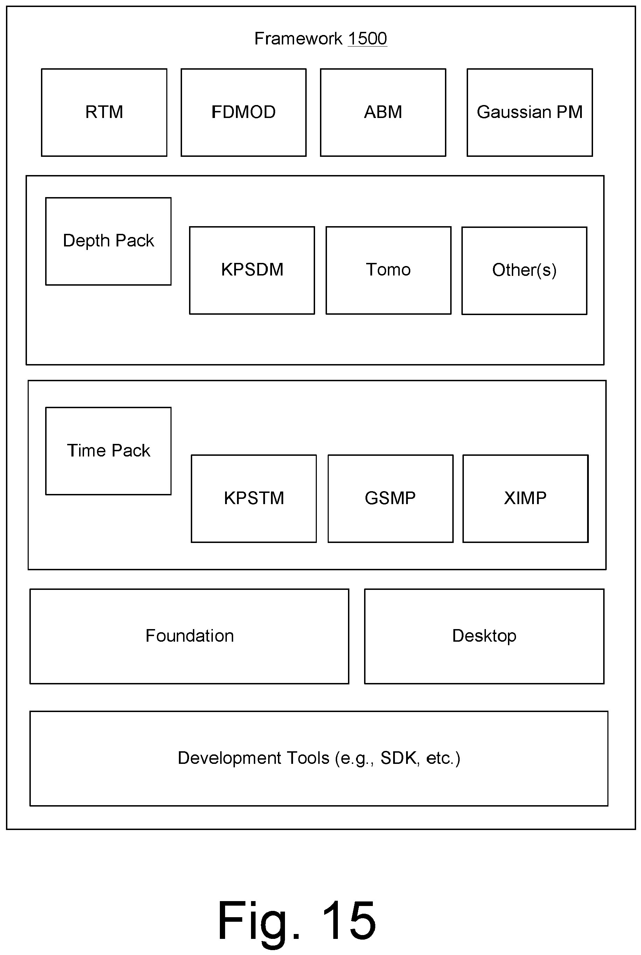

Fig. 15 illustrates an example of a computational framework; and

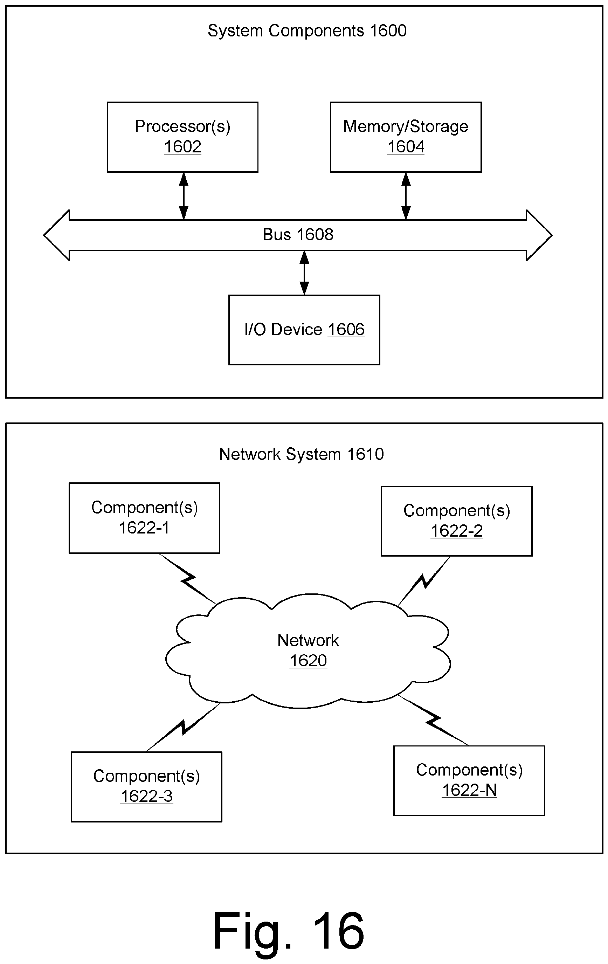

Fig. 16 illustrates components of a system and a networked system.

DETAILED DESCRIPTION

The following description includes the best mode presently contemplated for practicing the described implementations. This description is not to be taken in a limiting sense, but rather is made merely for the purpose of describing the general principles of the implementations. The scope of the described implementations should be ascertained with reference to the issued claims.

As mentioned, reflection seismology finds use in geophysics to estimate properties of subsurface formations. Reflection seismology can provide seismic data representing waves of elastic energy, as transmitted by P-waves and S-waves, in a frequency range of approximately 1 Hz to approximately 100 Hz or optionally less than 1 Hz and/or optionally more than 100 Hz. Seismic data may be processed and interpreted to understand better composition, fluid content, extent and geometry of subsurface rocks.

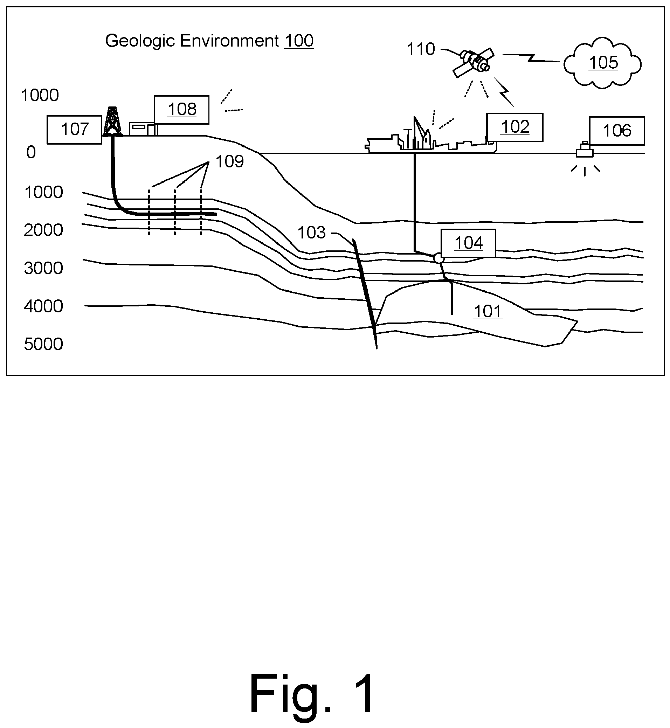

Fig. 1 shows a geologic environment 100 (an environment that includes a sedimentary basin, a reservoir 101, a fault 103, one or more fractures 109, etc.) and an example of an acquisition technique 140 to acquire seismic data (see data 160). A system may process data acquired by the technique 140 to allow for direct or indirect management of sensing, drilling, injecting, extracting, etc., with respect to the geologic environment 100. In turn, further information about the geologic environment 100 may become available as feedback (optionally as input to the system). An operation may pertain to a reservoir that exists in the geologic environment 100 such as the reservoir 101. A technique may provide information (as an output) that specifies one or more location coordinates of a feature in a geologic environment, one or more characteristics of a feature in a geologic environment, etc.

The geologic environment 100 may be referred to as a formation or may be described as including one or more formations. A formation may be a unit of lithostratigraphy such as a body of rock that is sufficiently distinctive and continuous.

A system may be implemented to process seismic data, optionally in combination with other data. Processing of data may include generating one or more seismic attributes, rendering information to a display or displays, etc. A process or workflow may include interpretation, which may be performed by an operator that examines renderings of information (to one or more displays, etc.) and that identifies structure or other features within such renderings. Interpretation may be or include analyses of data with a goal to generate one or more models and/or predictions (about properties and/or structures of a subsurface region).

A system may include features of a framework such as the PETREL seismic to simulation software framework (Schlumberger Limited, Houston, Texas). Such a framework can receive seismic data and other data and allow for interpreting data to determine structures that can be utilized in building a simulation model.

A system may include add-ons or plug-ins that operate according to specifications of a framework environment. As an example, a framework may be implemented within or in a manner operatively coupled to the DELFI cognitive exploration and production (E&P) environment (Schlumberger, Houston, Texas), which is a secure, cognitive, cloud-based collaborative environment that integrates data and workflows with digital technologies, such as artificial intelligence and machine learning. As an example, such an environment can provide for operations that involve one or more frameworks.

Seismic data may be processed using a framework such as the OMEGA framework (Schlumberger Limited, Houston, TX). The OMEGA framework provides features that can be implemented for processing of seismic data through prestack seismic interpretation and seismic inversion.

A framework for processing data may include features for 2D line and 3D seismic surveys. Modules for processing seismic data may include features for prestack seismic interpretation (PSI), optionally pluggable into a framework such as the DELFI framework environment.

In Fig. 1, the geologic environment 100 includes an offshore portion and an on-shore portion. A geologic environment may be or include one or more of an offshore geologic environment, a seabed geologic environment, an ocean bed geologic environment, etc.

The geologic environment 100 may be outfitted with one or more of a variety of sensors, detectors, actuators, etc. Equipment 102 may include communication circuitry that receives and that transmits information with respect to one or more networks 105. Such information may include information associated with downhole equipment 104, which may be equipment to acquire information, to assist with resource recovery, etc. Other equipment 106 may be located remote from a well site and include sensing, detecting, emitting or other circuitry and/or be located on a seabed. Such equipment may include storage and communication circuitry that stores and that communicates data, instructions, etc. One or more satellites may be provided for purposes of communications, data acquisition, etc. Fig. 1 shows a satellite 110 in communication with the network 105 that may be configured for communications, noting that the satellite may additionally or alternatively include circuitry for imagery (spatial, spectral, temporal, radiometric, etc.).

Fig. 1 also shows the geologic environment 100 as optionally including equipment 107 and 108 associated with a well that includes a substantially horizontal portion that may intersect with one or more of the one or more fractures 109; consider a well in a shale formation that may include natural fractures, artificial fractures (hydraulic fractures) or a combination of natural and artificial fractures. The equipment 107 and/or 108 may include components, a system, systems, etc. for fracturing, seismic sensing, analysis of seismic data, assessment of one or more fractures, etc.

A system may be used to perform one or more workflows. A workflow may be a process that includes a number of worksteps. A workstep may operate on data to create new data, to update existing data, etc. A system may operate on one or more inputs and create one or more results based on one or more algorithms. A workflow may be a workflow implementable in the PETREL software that operates on seismic data, seismic attribute(s), etc. A workflow may be a process implementable in the DELFI environment, etc. A workflow may include one or more worksteps that access a plug-in (external executable code, etc.). A workflow may include rendering information to a display (a display device). A workflow may include receiving instructions to interact with rendered information to process information and optionally render processed information. A workflow may include transmitting information that may control, adjust, initiate, etc. one or more operations of equipment associated with a geologic environment (in the environment, above the environment, etc.).

As an example, an acquisition technique can be utilized to perform a seismic survey. A seismic survey can acquire various types of information, which can include various types of waves (e.g., P, SV, SH, etc.). A P-wave can be an elastic body wave or sound wave in which particles oscillate in the direction the wave propagates. P-waves incident on an interface (at other than normal incidence, etc.) may produce reflected and transmitted S-waves ( "converted" waves). An S-wave or shear wave may be an elastic body wave in which particles oscillate perpendicular to the direction in which the wave propagates. S-waves may be generated by a seismic energy sources (other than an air gun). S-waves may be converted to P-waves. S-waves tend to travel more slowly than P-waves and do not travel through fluids that do not support shear. Recording of S-waves involves use of one or more receivers operatively coupled to earth (capable of receiving shear forces with respect to time). Interpretation of S-waves may allow for determination of rock properties such as fracture density and orientation, Poisson's ratio and rock type by crossplotting P-wave and S-wave velocities, and/or by other techniques. Parameters that may characterize anisotropy of media (seismic anisotropy) include the Thomsen parameters $\varepsilon$, $\delta$ and $\gamma$.

Seismic data may be acquired for a region in the form of traces. For example, a technique can utilize a source for emitting energy where portions of such energy (directly and/or reflected) may be received via one or more sensors (e.g., receivers). Energy received may be discretized by an analog-to-digital converter that operates at a sampling rate. Acquisition equipment may convert energy signals sensed by a sensor to digital samples at a rate of one sample per approximately 4 ms. Given a speed of sound in a medium or media, a sample rate may be converted to an approximate distance. The speed of sound in rock may be of the order of around 5 km per second. Thus, a sample time spacing of approximately 4 ms would correspond to a sample "depth" spacing of about 10 meters (assuming a path length from source to boundary and boundary to sensor). A trace may be about 4 seconds in duration; thus, for a sampling rate of one sample at about 4 ms intervals, such a trace would include about 1000 samples where latter acquired samples correspond to deeper reflection boundaries. If the 4 second trace duration of the foregoing scenario is divided by two (to account for reflection), for a vertically aligned source and sensor, the deepest boundary depth may be estimated to be about 10 km (assuming a speed of sound of about 5 km per second).

As mentioned, seismic data may be acquired and analyzed to understand better subsurface structure of a geologic environment. Reflection seismology finds use in geophysics, for example, to estimate properties of subsurface formations. As an example, reflection seismology may provide seismic data representing waves of elastic energy (e.g.,

as transmitted by P-waves and S-waves, in a frequency range of approximately 1 Hz to approximately 100 Hz or optionally less than 1 Hz and/or optionally more than 100 Hz). Seismic data may be processed and interpreted, for example, to understand better composition, fluid content, extent and geometry of subsurface rocks.

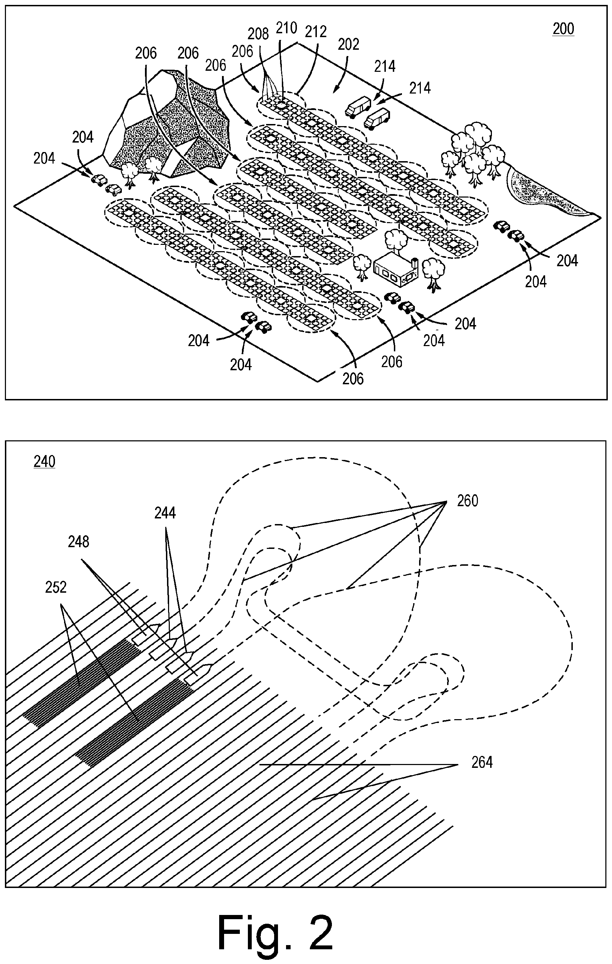

Fig. 2 shows an example of a simplified schematic view of a land seismic data acquisition system 200 and an example of a simplified schematic view of a marine seismic data acquisition system 240.

As shown with respect to the system 200, an area 202 to be surveyed may or may not have physical impediments to direct wireless communication between a recording station 214 (which may be a recording truck) and a vibrator 204. A plurality of vibrators 204 may be employed, as well as a plurality of sensor unit grids 206, each of which may have a plurality of sensor units 208.

As illustrated in Fig. 2 with respect to the system 200, approximately 24 to about 28 sensor units 208 may be placed in a vicinity (a region) around a base station 210. The number of sensor units 208 associated with each base station 210 may vary from survey to survey. Circles 212 indicate an approximate range of reception for each base station 210.

In the system 200 of Fig. 2, the plurality of sensor units 208 may be employed in acquiring and/or monitoring land-seismic sensor data for the area 202 and transmitting the data to the one or more base stations 210. Communications between the vibrators 204, the base stations 210, the recording station 214, and the seismic sensors 208 may be wireless (at least in part via air for a land-based system; or optionally at least in part via water for a sea-based system).

In the system 240 of Fig. 2, one or more source vessels 240 may be utilized with one or more streamer vessels 248 or a vessel or vessels may tow both a source or sources and a streamer or streamers 252. In the example of Fig. 2, the vessels 244 and 248 (e.g., or just the vessels 248 if they include sources) may follow predefined routes (e.g., paths) for an acquisition geometry that includes inline and crossline dimensions. As shown, routes 260 can be for maneuvering the vessels to positions 264 as part of the survey. As an example, a marine seismic survey may call for acquiring seismic data during a turn (e.g., during one or more of the routes 260).

The example systems 200 and 240 of Fig. 2 demonstrate how surveys may be performed according to an acquisition geometry that includes dimensions such as inline and crossline dimensions, which may be defined as x and y dimensions in a plane or surface where another dimension, z, is a depth dimension. As explained, time can be a proxy for depth, depending on various factors, which can include knowing how many reflections may have occurred as a single reflection may mean that depth of a reflector can be approximated using one-half of a two-way traveltime, some indication of the speed of sound in the medium and positions of the receiver and source (e.g., corresponding to the two-way traveltime).

Two-way traveltime (TWT) can be defined as the elapsed time for a seismic wave to travel from its source to a given reflector and return to a receiver (e.g., at a surface, etc.). As an example, a minimum two-way traveltime can be defined to be that of a normal-incidence wave with zero offset.

As an example, a seismic survey can include points referred to as common midpoints (CMPs). In multichannel seismic acquisition, a CMP is a point that is halfway between a source and a receiver that is shared by a plurality of source-receiver pairs. In such a survey, various angles may be utilized that may define offsets (e.g., offsets from a CMP, etc.). In a CMP approach, redundancy among source-receiver pairs can enhance quality of seismic data, for example, via stacking of the seismic data. A CMP can be vertically above a common depth point (CDP), or common reflection point (CRP). As an example, seismic data may be presented as a gather, which can be an image of seismic traces that share an acquisition parameter, such as a common midpoint gather (CMP gather or CMG), which contains traces having a common midpoint (CMP). In such an example, a CMG may be presented with respect to a horizontal dimension and a time dimension, which may be a TWT dimension.

As an example, a seismic survey can include points referred to as downward reflection points (DRPs). A DRP is a point where seismic energy is reflected downwardly. For example, where multiple interfaces exists, seismic energy can reflect upwardly from one interface, reach a shallower interface and then reflect downwardly from the shallower interface.

As an example, a seismic survey may be an amplitude variation with offset (AVO) survey. Such a survey can record variation in seismic reflection amplitude with change in distance between position of a source and position of a receiver, which may indicate differences in lithology and fluid content in rocks above and below a reflector.

AVO analysis can allow for determination of one or more characteristics of a subterranean environment (e.g., thickness, porosity, density, velocity, lithology and fluid content of rocks, etc.). As an example, gas-filled sandstone might show increasing amplitude with offset; whereas, a coal might show decreasing amplitude with offset. AVO analysis can be suitable for young, poorly consolidated rocks, such as those in the Gulf of Mexico.

As an example, a method may be applied to seismic data to understand better how structural dip may vary with respect to offset and/or angle as may be associated with emitter-detector (e.g., source-receiver) arrangements of a survey, for example, to estimate how suitable individual offset/angle gathers are for AVO imaging. As explained, a gather may be a collection of seismic traces that share an acquisition parameter, such as a common midpoint (CMP), with other collections of seismic traces. For example, consider an AVO survey that includes a plurality of emitter-detector arrangements (e.g., source-receiver pairs) with corresponding angles defined with respect to a common midpoint (CMP). Given a CMP, acquired survey data may be considered to cover a common subsurface region (e.g., a region that includes the midpoint).

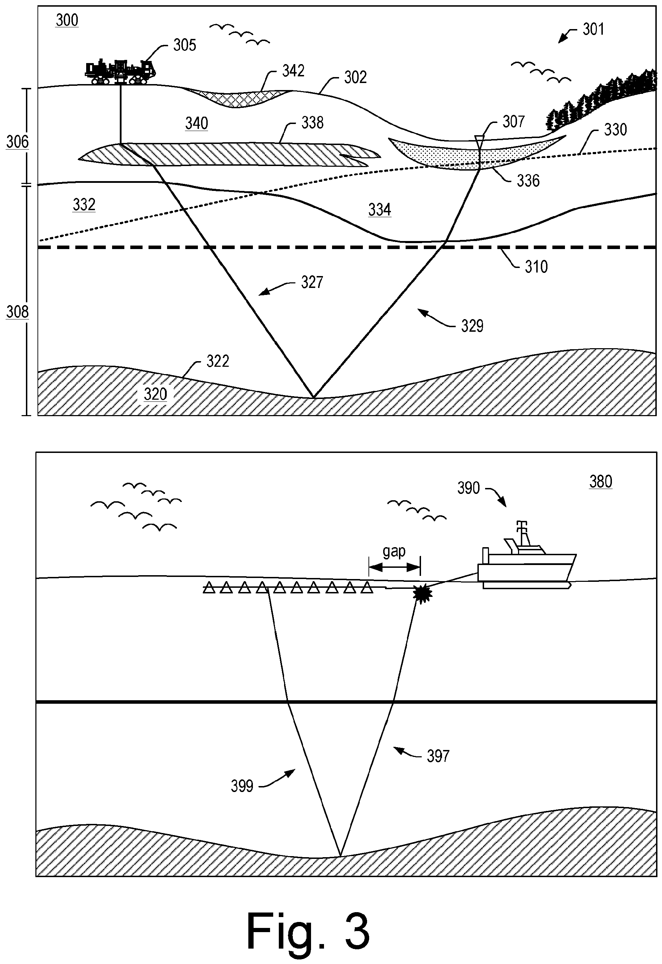

Fig. 3 shows an example of a land system 300 and an example of a marine system 380. The land system 300 is shown in a geologic environment 301 that includes a surface 302, a source 305 at the surface 302, a near-surface zone 306, a receiver 307, a bedrock zone 308 and a datum 310 where the near-surface zone 306 (e.g., near-surface region) may be defined at least in part by the datum 310, which may be a depth or layer or surface at which data above are handled differently than data below. For example, a method can include processing seismic data that aims to "place" the source 305 and the receiver 307 on a datum plane defined by the datum 310 by adjusting (e.g., "correcting") traveltimes for propagation through the near-surface region (e.g., a shallower subsurface region).

In the example system 300 of Fig. 3, the geologic environment 301 can include various features such as, for example, a layer 320 that defines an interface 322 that can be a reflector, a water table 330, a leached zone 332, a glacial scour 334, a buried river channel 336, a region of material 338 (e.g., ice, evaporates, volcanics, etc.), a high velocity zone 340, and a region of material 342 (e.g., Eolian or peat deposits, etc.).

In Fig. 3, the land system 300 is shown with respect to downgoing rays 327 (e.g., downgoing seismic energy) and upgoing rays 329 (e.g., upgoing seismic energy). As illustrated the rays 327 and 329 pass through various types of materials and/or reflect off of various types of materials.

Various types of seismic surveys can contend with surface unevenness and/or near-surface heterogeneity. For example, a shallow subsurface can include large and abrupt vertical and horizontal variations that may be, for example, caused by differences in lithology, compaction cementation, weather, etc. Such variations can generate delays or advances in arrival times of seismic waves passing through them relative to waves that do not. By accounting for such time differences, a seismic image may be of enhanced resolution with a reduction in false structural anomalies at depth, a reduction in mis-ties between intersecting lines, a reduction in artificial events created from noise, etc.

As an example, a method can include adjusting for such time differences by applying a static, or constant, time shift to a seismic trace where, for example, applying a static aims to place a source and receiver at a constant datum plane below a near-surface zone. As an example, an amount by which a trace is adjusted can depend on one or more factors (e.g., thickness, velocity of near-surface anomalies, etc.).

In Fig. 3, the datum 310 is shown, for example, as a plane, below which strata may be of particular interest in a seismic imaging workflow. In a three-dimensional model of a geologic environment, a near surface region may be defined, for example, at least in part with respect to a datum. As an example, a velocity model may be a multidimensional model that models at least a portion of a geologic environment.

In the example of Fig. 3, the source 305 can be a seismic energy source such as a vibrator. As an example, a vibrator may be a mechanical source that delivers vibratory seismic energy to the Earth for acquisition of seismic data. As an example, a vibrator may be mounted on a vehicle (e.g., a truck, etc.). As an example, a seismic source or seismic energy source may be one or more types of devices that can generate seismic energy (e.g., an air gun, an explosive charge, a vibrator, etc.).

Vibratory seismic data can be seismic data whose energy source is a vibrator that may use a vibrating plate to generate waves of seismic energy. As an example, the frequency and the duration of emitted energy can be controllable, for example, frequency and/or duration may be varied according to one or more factors (e.g., terrain, type of seismic data desired, etc.).

As an example, a vibrator may emit a linear sweep of a duration that is of the order of seconds (e.g., at least seven seconds, etc.), for example, beginning with high frequencies and decreasing with time (downsweeping) or going from low to high frequency (upsweeping). As an example, frequency may be changed (e.g., varied) in a nonlinear manner (e.g., certain frequencies are emitted longer than others, etc.). In various vibrator scenarios, resulting source wavelet can be one that is not impulsive. As an example, parameters of a vibrator sweep can include start frequency, stop frequency, sweep rate and sweep length.

As an example, a vibrator may be employed in land acquisition surveys for areas where explosive sources may be contraindicated (e.g., via regulations, etc.). As an example, more than one vibrator can be used simultaneously (e.g., in an effort to improve data quality, etc.).

As an example, a receiver may be a may be a UNIQ sensor unit (Schlumberger Limited, Houston, Texas). As an example, a sensor unit can include a geophone, which may be configured to detect motion in a single direction. As an example, a geophone may be configured to detect motion in a vertical direction. As an example, three mutually orthogonal geophones may be used in combination to collect so-called 3C seismic data. As an example, a sensor unit that can acquire 3C seismic data may allow for determination of type of wave and its direction of propagation. As an example, a sensor assembly or sensor unit may include circuitry that can output samples at intervals of 1 ms, 2 ms, 4 ms, etc. As an example, an assembly or sensor unit can include an analog to digital converter (ADC) such as, for example, a 24-bit sigma-delta ADC (e.g., as part of a geophone or operatively coupled to one or more geophones). As an example, a sensor assembly or sensor unit can include synchronization circuitry such as, for example, GPS synchronization circuitry with an accuracy of about plus or minus 12.5 microseconds. As an example, an assembly or sensor unit can include circuitry for sensing of real-time and optionally continuous tilt, temperature, humidity, leakage, etc. As an example, an assembly or sensor unit can include calibration circuitry, which may be self-calibration circuitry.

In Fig. 3, the system 380 includes equipment 390, which can be a vessel that tows one or more sources and one or more streamers (e.g., with receivers). In the system 380, a source of the equipment 390 can emit energy at a location and a receiver of the equipment 390 can receive energy at a location. The emitted energy can be at least in part along a path of the downgoing energy 397 and the received energy can be at least in part along a path of the upgoing energy 399.

In various systems, for one or more reasons, a gap in coverage may exist. For example, in the system 380 a gap is identified and labeled where the gap may be defined as a distance between a seismic source and a seismic receiver. In such an example, the distance may be considered a practical or a safe distance for locating a seismic receiver from a seismic source. If a seismic receiver is too close to a seismic source, the seismic receiver may experience a rather large shock wave and/or may otherwise experience energy that may be quite high and raise concerns with calibration, dynamic range, etc.

In the examples of Fig. 3, the paths are illustrated as single reflection paths for sake of simplicity. In the environments illustrated, additional interactions, reflections can be expected. For example, ghosts may be present. A ghost can be defined as a short-path multiple, or a spurious reflection that occurs when seismic energy initially reverberates upward from a shallow subsurface and then is reflected downward, such as at the base of weathering or between sources and receivers and the sea surface. As an example, the equipment 390 can include a streamer that is configured to position receivers a distance below an air-water interface such that ghosts can be generated where upgoing energy impacts the air-water interface and then reflects downward to the receivers. In such an example, a process may be applied that aims to "deghost" seismic data. Deghosting can be applied to marine seismic survey data where such a process aims to attenuate signals that are downgoing from an air-water interface (i.e., sea surface interface). As mentioned, one or more other techniques, technologies, etc., may be utilized for seismic surveying (e.g., ocean bottom cables, ocean bottom nodes, etc.).

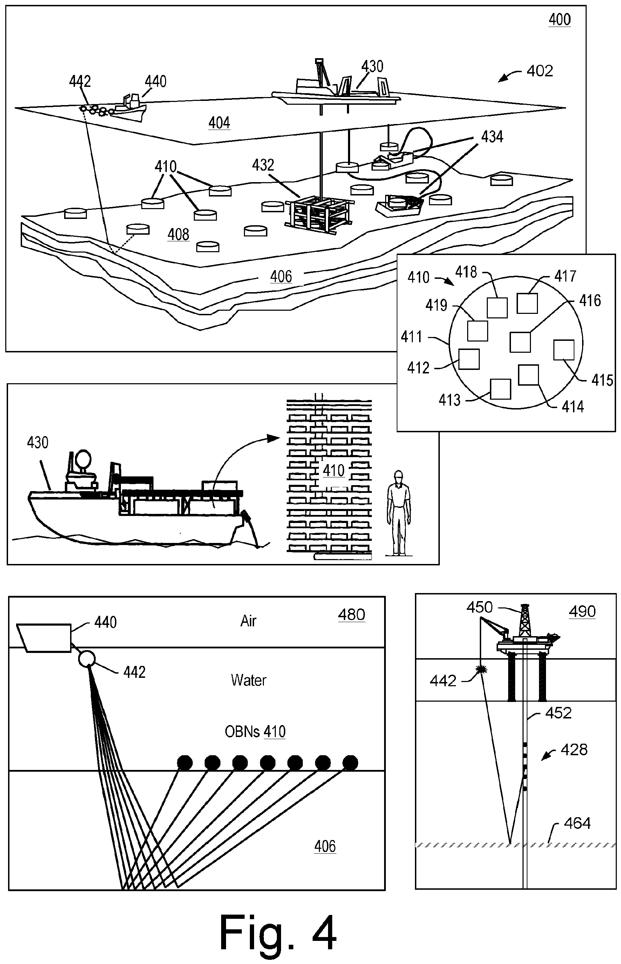

Fig. 4 shows a system 400 for acquisition of information in a geologic environment 402 that includes an air-water surface 404, a formation 406 and a seabed 408 (e.g., water-bed interface) where nodes 410 are positioned on the seabed 408. Equipment may be utilized to position the nodes 410 on the seabed 404 and retrieve the nodes 410 from the seabed 404. Such equipment may include one or more vessels 430, one or more carriers 432 and one or more vehicles 434, which may be autonomous, semi-autonomous, etc. (remotely operated vehicles (ROVs), etc.). The system 400 may include a seismic source vessel 440 that includes one or more seismic sources 442. The seismic source vessel 440 may travel a path while, at times, emitting seismic energy from the one or more sources 442. In such an approach, the nodes 410 can receive portions of the seismic energy, which can include portions that have travelled through the formation 406. Analysis of received seismic energy by the nodes 410 may reveal features of the formation 406.

In Fig. 4, the vessel 430 is shown as including nodes 410 as cargo arranged on racks. The nodes 410 can be deployed to form an array, for example, according to a survey plan. An array of nodes may be cabled or un-cabled. A cable may be relatively light weight and utilized to deploy a node receiver line with nodes coupled to the cable at spaced intervals. A rack can be utilized to securely store nodes in slots along multiple rows and columns. An individual slot may include a communications portal that can establish communication via contact(s) and/or contactless/wireless with an individual node seated in the individual slot for download of information, etc. A rack can include charger circuitry that can charge one or more batteries of an individual node seated in an individual slot. A node can be sealed such that components (circuitry, one or more batteries, etc.) are not exposed to water when the node is deployed on an underwater bed. A seal may be a hermetic seal that aims to prevent passage of air and/or water. A seal or seals can aim to prevent intrusion of water from an exterior region to an interior region of a node. Such a node can be considered to be water-tight. A sealed node can be a self-contained piece of equipment that can sense information independent of other equipment when positioned on an underwater surface that may be a seabed.

A rack may be dimensioned in accordance with shipping container dimensions such as about 3 meters by about 7 meters by about 3 meters. As shown in Fig. 4, with reference to a silhouette of a person that is about 1.8 meters in height, a node may be about a meter or less in diameter and about half a meter in height or less.

In Fig. 4, the one or more sources 442 may be an air gun or air gun array (a source array). A source can produce a pressure signal that propagates through water into a formation where acoustic and elastic waves are formed through interaction with features (structures, fluids, etc.) in the formation. Acoustic waves can be characterized by pressure changes and a particle displacement in a direction of which the acoustic wave travels. Elastic waves can be characterized by a change in local stress in material and a particle displacement. Acoustic and elastic waves may be referred to as pressure and shear waves, respectively; noting that shear waves may not propagate in water. Collectively, acoustic and elastic waves may be referred to as a seismic wavefield.

Material in a formation may be characterized by one or more physical parameters such as density, compressibility, and porosity. In the geologic environment 402 of Fig. 4, energy emitted from the one or more sources 442 can be transmitted to the formation 406; however, elastic waves that reach the seabed 408 will not propagate back into the water. Such elastic waves may be received by sensors of the nodes 410. The nodes 410 can include motion sensors that can measure one or more of displacement, velocity and acceleration. A motion sensor may be a geophone, an accelerometer, etc. As to pressure waves, the nodes 410 can include pressure wave sensors such as hydrophones.

In Fig. 4, the nodes 410 can include sensors for acquiring seismic wavefield information at the seabed 408. Each of the nodes 410 can include one or more hydrophones and/or one or more motion sensors (one or more geophones, one or more accelerometers, etc.).

A node can include various types of circuitry. Such circuitry can include circuitry that can digitize (analog to digital conversion ADC circuitry) and can include circuitry that can record signals (a microcontroller, a processor, etc., operatively coupled to memory). Each of the nodes 410 can include a housing 411, sensors 412 and 413, one or more microcontrollers or processors 414, one or more batteries 415, memory 416, ADC circuitry 417, a compass 418, communication circuitry 419, etc. As an example, a node can include one or more clocks, which may be amenable to calibration, synchronization, etc. For example, consider synchronizing to a signal, calibrating against a value, etc. As an example, a node can provide for receiving seismic energy and generating digital data that can be coded or otherwise stamped with information corresponding to time (e.g., according to one or more clocks). Various components of a node may be operatively coupled via wires, connectors, etc. A node can include one or more circuit boards (printed circuit boards, etc.) that can provide for electrical connections between various components, etc.

After deployment, one or more acoustic techniques may be utilized to determine node locations. A technique may employ acoustic pinging where acoustic pingers emit relatively high-frequency pings that are substantially above the maximum frequency of interest for seismic applications. Such relatively high-frequency acoustic signals can be picked up by one or more seismic sensors. Triangulation or one or more other techniques may be utilized to determine node locations for nodes deployed on an underwater surface such as a seabed.

Nodes may be utilized to acquire information spatially and temporally such as in a time-lapse seismic survey, which may be a four-dimensional seismic survey (4D seismic survey). A seismic image of a formation may be made for a first survey and a seismic image of the formation may be made for a second survey where the first and second surveys are separated by time (lapse in time). In such an approach, a comparison of the images can infer changes in formation properties that may be tied to production of hydrocarbons, injection of water or gas, etc.

A first survey may be referred to as a baseline survey, while a subsequent survey may be referred to as a monitor survey. To minimize artifacts in differences between seismic images from successive lapses, a monitor survey may aim to replicate a configuration of a corresponding baseline survey. Where nodes are utilized at various positions on a seabed for a baseline survey, a monitor survey may aim to place nodes on the seabed in a manner that replicates the various positions of the nodes of the baseline survey. For the monitor survey, the nodes may be the same nodes, include some of the same nodes, include some different nodes or may be different nodes. A service may have a stock of nodes that can be utilized for various surveys where once a survey is complete, the nodes are retrieved, transported and positioned for another survey. Such a service may update, replace, etc., nodes from time to time.

A position to within a few meters of accuracy of one or more nodes may be determined via one or more of GPS, an acoustic positioning system (a short-baseline (SBL) or ultra-short baseline (USBL) acoustic system), and one or more other types of systems.

A node can include sensor circuitry for acquiring measurements of a seismic pressure wavefield and its gradient; consider sensor circuitry that can measure a seismic pressure wavefield and its gradient in vertical and crossline directions.

A node can include point-receiver circuitry. A point-receiver approach can combine hydrophones with tri-axial microelectromechanical system (MEMS) accelerometers. In such an approach, the MEMS accelerometers can measure a substantial bandwidth of particle acceleration due to seismic wavefields. Measurements of particle acceleration can be directly related to a gradient in a pressure wavefield. A node may include the ISOMETRIX technology, which includes point-receiver circuitry (Schlumberger Limited, Houston, Texas).

In the example of Fig. 4, one of the nodes 410 may be connected to one or more other nodes of the nodes 410 via a cable. A vessel may include a cable that is operatively coupled to at least one node. In the system 400 of Fig. 4, nodes may be deployed according to a survey plan in a grid pattern; consider placement of nodes on a seabed according to an x,y grid where distance between adjacent nodes may be of the order of hundreds of meters. As shown in the system 400, the seismic source vessel 440 may be employed with the one or more sources 442 that can emit energy, which can, in turn, be received via one or more of the nodes 410.

As an example, a common shot approach 480 may be utilized, as illustrated via the formation 406, the OBNs 410, the seismic source vessel 440 and the one or more sources 442. As explained, the vessel 440 can tow one or more sources at or below an air-water interface where the OBNs 410 can be positioned on a water-formation interface (e.g., a seafloor, seabed, ocean bottom, sea bottom, etc.). As shown, the energy of the source or the sources 442 passes through the water and then into the formation 406 where a portion of the energy is reflected at an interface (e.g., a reflector). As shown, energy can reflect off the interface and progress upwardly to the OBNs 410, which can be receivers that record the energy.

When seismic traces of a gather come from a single shot and many receivers, they can form a common shot gather; whereas, a single receiver with many shots can form a common receiver gather. A shot gather is a plot of traces with respect to line distance (e.g., an inline or a crossline series of receivers) with respect to time. Such a plot may be referred to as an image, which includes information about a subsurface region; noting that traces may be processed to generate one or more other types of images of a subsurface region.

Also shown in Fig. 4 is an inset of a zero-offset vertical seismic profile (VSP) scenario 490. In such a scenario, an acquisition geometry may be limited to an ability to position equipment that is physically coupled to a rig 450. As shown, for given the acquisition geometry, there may be no substantial offset between the source 442 and a bore 452. In such a scenario, a zero-offset VSP may be acquired where seismic waves travel substantially vertically down to a reflector (see the layer 464) and up to receivers 428, which may be a receiver array. Where one or more vessels are employed, one or more other types of surveys may be performed. A three-dimensional VSP may be performed using a vessel. As an example, a VSP may be performed using one or more nodes, etc.

Some examples of techniques that can process seismic data include migration and migration inversion, which may be implemented for purposes such as structural determination and subsequent amplitude analysis. In seismic exploration, signal can be defined as a part of a recorded seismic record (e.g., events) that is decipherable and useful for determining subsurface information (e.g., relevant to the location and production of hydrocarbons, etc.). Migration and migration inversion are techniques that can be used to extract subsurface information from seismic reflection data.

As an example, a migration technique can include predicting a coincident source and receiver at depth at a time equal to zero; an approach that may be extended for heterogeneous media and to accommodate two-way propagation in a local sense at points from the source to a target reflector and back from the reflector to the receiver and in a global sense, separately for each of the two legs from the source to the reflector and from the reflector to the receiver. Such an approach for two-way wave propagation migration may provide for quantitative and definitive definition of the roles of primaries and multiples in migration where, for example, migration of primaries can provide subsurface structure and amplitude information.

Various techniques that can be used to predict a wavefield inside a volume from (measured) values of a field on a surface surrounding the volume involve Green's theorem. Green's theorem may be implemented, for example, as part of a process for a finite volume model prediction of the so-called "source and receiver experiment" for two-way waves at depth. As an example, Green's theorem can predict a wavefield at an arbitrary depth z between a shallower depth "a" and a deeper depth "b".

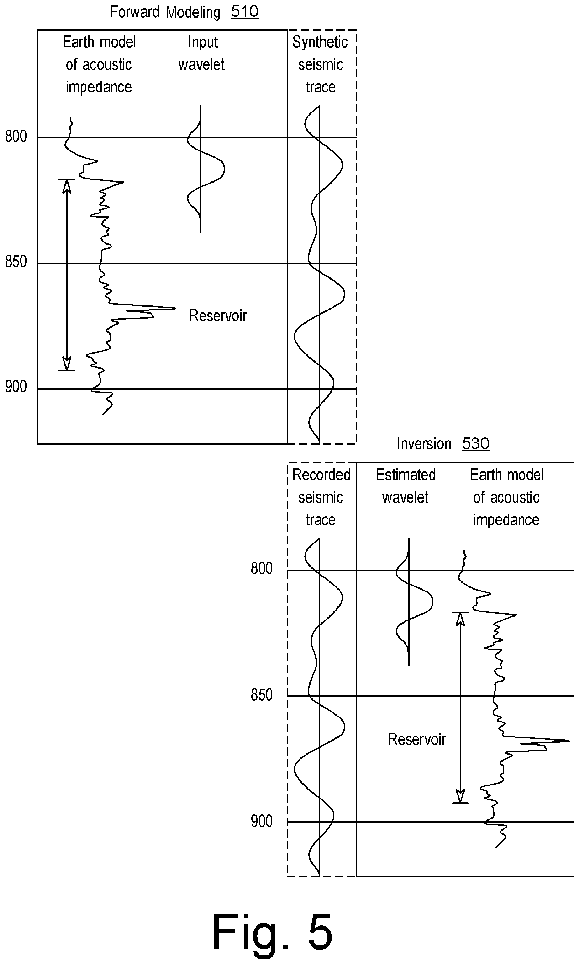

Fig. 5 shows an example of forward modeling 510 and an example of inversion 530 (e.g., an inversion or inverting). As shown, the forward modeling 510 progresses from an earth model of acoustic impedance and an input wavelet to a synthetic seismic trace while the inversion 530 progresses from a recorded seismic trace to an estimated wavelet and an Earth model of acoustic impedance. As an example, forward modeling can take a model of formation properties (e.g., acoustic impedance as may be available from well logs) and combine such information with a seismic wavelength (e.g., a pulse) to output one or more synthetic seismic traces while inversion can commence with a recorded seismic trace, account for effect(s) of an estimated wavelet (e.g., a pulse) to generate values of acoustic impedance for a series of points in time (e.g., depth).

Acoustic impedance is the opposition of a medium to a longitudinal wave motion. Acoustic impedance is a physical property whose change determines reflection coefficients at normal incidence, that is, seismic P-wave velocity multiplied by density. Acoustic impedance characterizes the relationship between the acting sound pressure and the resulting particle velocity.

During the propagation of seismic wave along a ray path, a seismic wave transmits through or reflects at a material boundary and/or converts its vibration mode between P-wave and S-wave. An observed amplitude of a seismic wave depends on an acoustic impedance contrast at a material boundary between an upper medium and a lower medium. Acoustic impedance, Z, can be defined by a multiplication of density, $\rho$, and seismic velocity, Vp, in each media. Acoustic impedance Z tends to be proportional to Vp for the many sedimentary and crustal rocks (e.g., granite, anorthite, pyrophyllite, and quartzite), except for some ultramafic rocks (e.g., dunite, eclogite, and peridotite) in the mantle.

In various instances, an inversion problem may be ill-posed for one or more reasons. Recorded data can include discrepancies including, for example, missing near offsets (e.g., due to gaps, etc.), and multiple events with other artifacts that contaminate the model of primaries that is inverted for. Artifacts can also be associated with inversion inaccuracies coming from inaccurate physics simulation (e.g., inversion of 3D data using 2D inversion, wavelet estimation errors, etc.).

For various reasons, a seismic survey may have coverage issues. For example, certain subsurface structures may impact "illumination" of one or more regions by seismic energy. In seismology, illumination can refer to an ability for seismic energy to fall on a reflector and thus be available to be reflected. Illumination can depend on source-receiver configuration (e.g., a survey geometry) and velocity distribution such as, for example, irregular velocity contrasts that may bend raypaths differently than adjacent raypaths. Various regions can have complicated velocity variations, for example, consider high-velocity contrast regions and subsalt regions.

A subsalt region can be an exploration and production play type in which prospects exist below salt layers. Prospecting for such regions below salt layers can pose challenges with respect to illumination, which may result in seismic data of poor quality. The Gulf of Mexico includes subsalt-producing fields; noting that subsalt regions also exist in other parts of the world such as, for example, offshore Brazil in the Santos, Campos and Espirito Santo basins.

A region below salt (e.g., a subsalt region) may be referred to as a pre-salt layer. As an example, a region may include a diachronous series of geological formations on a continental shelf of an extensional basin formed after the break-up of Gondwana, which may be characterized by deposition of thick layers of evaporites that can be composed mostly of salt. In various regions, some petroleum generated from sediments in a pre-salt layer may not have migrated upward to post-salt layers above, for example, due to one or more salt domes. Such types of regions exist off the coast of Africa and the coast of Brazil. Total pre-salt hydrocarbon reserves are estimated to be a substantial fraction of the world's hydrocarbon reserves.

Off the coast of Brazil, oil and natural gas reserves lie below an approximately 2,000 m (6,600 ft) thick layer of salt, which in turn is beneath more than 2,000 m (6,600 ft) of post-salt sediments in places, which in turn is under water depths between 2,000 m and 3,000 m (6,600 ft and 9,800 ft) in the South Atlantic. Drilling through rock and salt to extract pre-salt oil and gas can be complicated and costly. As explained, seismic surveying can be challenging in such regions, which can introduce uncertainties in planning, drilling, etc.

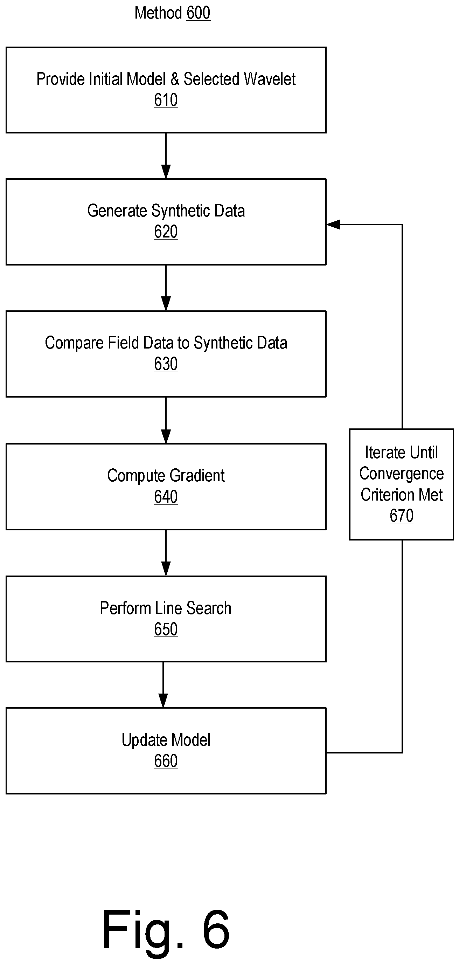

Fig. 6 shows an example of a method 600 that can perform a full waveform inversion (FWI). As shown, the method 600 includes a provision block 610 for providing an initial model and a selected wavelet, a generation block 620 for generating synthetic seismic data using the model and the wavelet, a comparison block 630 for comparing the synthetic seismic data to field seismic data, a computation block 640 for computing a gradient, a performance block 650 for performing a line search and an update block 660 for updating the model to provide an updated model, which may then be used by the generation block 620. As shown, per an iteration block 670, the method 600 can proceed in an iterative manner until one or more convergence criteria are met, which may be based on error between synthetic seismic data and field seismic data. As an example, the method 600 may be implemented by a computational framework such as, for example, the OMEGA framework.

As an example, a model can be a velocity model. A velocity model can be a single dimensional model or a multidimensional model that provides a spatial distribution of velocity in a subsurface environment. For example, consider a model that uses constant-velocity units (layers), through which raypaths obeying Snell's law can be traced. As mentioned, acoustic impedance and velocity are related and, as explained with respect to Fig. 5, a model (e.g., acoustic impedance and/or velocity) can be utilized for forward modeling and inversion (e.g., inverting).

As with various types of inversions, convergence may occur to a local solution rather than to a global solution. For example, a model may be generated that satisfies a local minimum in error where, in actuality, a model can be generated that satisfies a global minimum in error. In other words, the method 600 can get stuck in a sub-optimal solution space such that a generated model is sub-optimal.

As explained with respect to Fig. 5, forward modeling can be used to generate synthetic data and an inversion can generate a model using field data (e.g., actual, real-world data). In the method 600 of Fig. 6, forward modeling is employed to generate the synthetic seismic data, which may be performed using a numerical technique such as the finite-difference method (FD method) or one or more other techniques. As to comparing synthetic data to actual data, while the method 600 includes gradient computation and line search, one or more of various techniques may be utilized to update a model for a subsequent iteration.

For various seismic imaging applications it is useful to decompose an acoustic (or elastic) model into a (possibly smooth) reference model that controls the traveltime of transmitted events, and perturbation component that scatters/reflects the wavefield. In such an approach, primaries can then be modelled by a first-order Born approximation which involves simulating a scattered field, by (i) propagating the source wavefield in the reference model, (ii) scattering once from the perturbation component, and then (iii) a further propagation in the reference model.

As an example, a method can provide for improved seismic imaging where a decomposition approach involves a reference model that controls traveltime of transmitted events and a perturbation component that scatters and/or reflects a wavefield. In such an example, accuracy can be improved by allowing a scattered wavefield to interact with a true (e.g., reference plus perturbation) model for a finite number of time-steps. In such an approach, as the number of time-steps increases, the accuracy of the modelling process can increase. As an example, if the number of time-steps is approximately equal to a seismic wavelength, then the scattered wavefield can include effects of thin-layering and scattering attenuation. As such physical effects are not properly accounted for with a first-order Born approximation, the scattered wavefield interaction approach for a finite number of time-steps improves accuracy in seismic imaging; further the scattered wavefield interaction approach does not include longer path multiples that can cause artefacts in a seismic image.

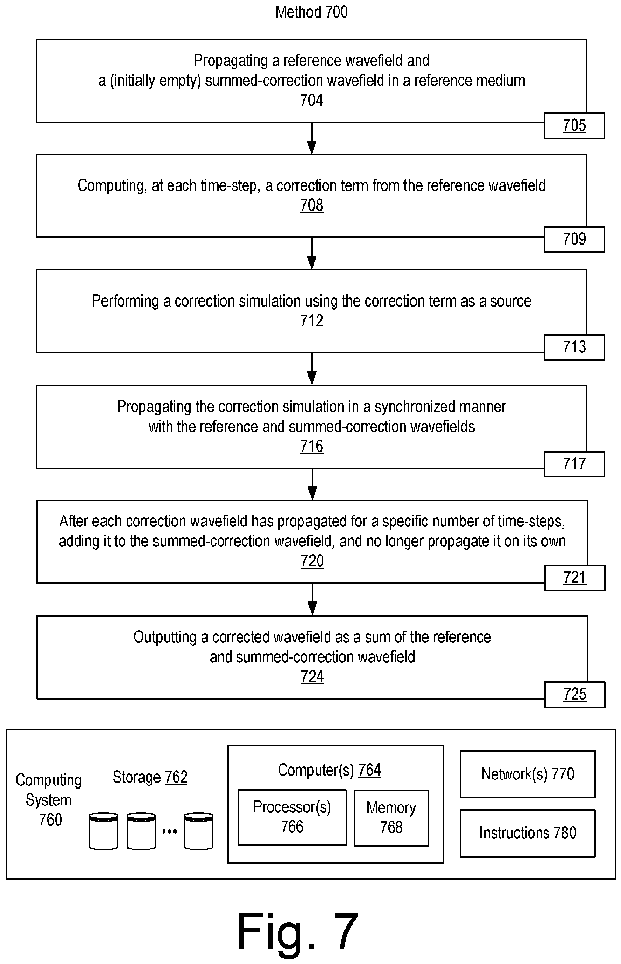

Fig. 7 shows an example of a method 700 that includes a propagation block 704 for propagating a reference wavefield and a (initially empty) summed-correction wavefield in a reference medium; a computation block 708 for, at each time-step, computing a correction term from the reference wavefield; a simulation block 712 for performing a correction simulation using the correction term as a source; a propagation block 716 for propagating the correction simulation in a synchronized manner with the reference and summed-correction wavefields; an addition block 720 for, after each correction wavefield has propagated for a specific number of time-steps, adding it to the summed-correction wavefield, and no longer propagate it on its own; and a output block 724 for outputting a corrected wavefield as a sum of the reference and summed-correction wavefield.

In such an example, a reference medium can be a smoothed version of the true medium. As an example, a reference medium can be acoustic and the true medium can be elastic. As an example, a correction can be applied in a subset (in time and space) of a modelling domain. As an example, a correction can be used to simulate a wavefield without long period multiples. As an example, the method 700 of Fig. 7 may be utilized in a full-waveform inversion (FWI). For example, the corrected wavefields can be used for full-waveform inversion.

The method 700 is shown in Fig. 7 in association with various computer-readable media (CRM) blocks 705, 709, 713, 717, 721 and 725. Such blocks generally include instructions suitable for execution by one or more processors (or cores) to instruct a computing device or system to perform one or more actions. While various blocks are shown, a single medium may be configured with instructions to allow for, at least in part, performance of various actions of the method 700 (e.g., using the computing system 760, etc.). A computer-readable medium (CRM) may be a computer-readable storage medium that is not a carrier wave, that is not a signal and that is non-transitory.

Fig. 7 shows the computing system 760 as including one or more information storage devices 762, one or more computers 764, one or more network interfaces 770 and instructions 780. As to the one or more computers 764, each computer may include one or more processors (or processing cores) 766 and memory 768 for storing instructions executable by at least one of the one or more processors. A computer may include one or more network interfaces (wired or wireless), one or more graphics cards, a display interface (wired or wireless), etc. A system may include one or more display devices (optionally as part of a computing device, etc.). Memory can be a computer-readable storage medium. A computer-readable storage medium is not a carrier wave, is not a signal and is non-transitory.

As explained, a method can include modelling correction wavefields with an extended interaction time. Such an approach can improve accuracy of seismic imaging, particularly as to features such as thin-layering in a subsurface geologic region as effects of thin-layering and scattering attenuation can be accounted for without including longer path multiples that can cause artifacts in seismic images.

As an example, internal multiples can be attenuated by an inverse-scattering series method. For the 1-D case, first-order internal multiples can be modelled with the repeated integration over depth:

$$b_3(k) = \int_{-\infty}^{\infty} dz_1 \, e^{ikz_1} \, b(z_1) \int_{-\infty}^{z_1-\epsilon} dz_2 \, e^{-ikz_2} \, b(z_2) \int_{z_2+\epsilon}^{\infty} dz_3 \, e^{ikz_1} \, b(z_3) \ (1)$$

In Equation (1), the $\varepsilon$ parameter can play a role in separating short-path/sub-wavelength internal multiples that result in a distortion of a wavelet (via scattering attenuation) from longer path internal multiples that can cause artifact events in seismic images. From a practical point-of-view, if $\varepsilon$ is too small, then the method can effectively damage primaries; however, if it is too large, then short period multiples may not be removed.

As an example, a method can introduce a parameter into modelling of scattering with time-domain finite-differences, allowing multiple short-path interactions within a scattered field while excluding longer range interactions.

Using the finite-difference method (FD method), wave propagation can be modelled recursively. For example, given the wavefield at time step, $i$, a method can calculate the wavefield at time $i + 1$, by applying a time advancement operator. For example, consider Equation (2):

$$q_i = Lq_{i-1} + Mq_{i-2} \ (2)$$

In Equation (2), the time-stepping operators, $L$ and $M$, depend on the medium parameters of the true earth model, $v$.

Given a reference model, $\bar{v}$, which may be a simplified version of the true earth model, a method can include defining corresponding time-stepping operators, $\bar{L}$ and $\bar{M}$. Such an approach does not demand assumptions about the relationship between true and reference operators, other than that they are linear and have a common domain and range, and so are compatible in terms their physical and temporal sampling requirements.

In principle, when modelling, a method can choose a time-stepping operator at each time-step. For example, an approach can start modelling in a background medium, switch to the true medium at a certain point, and then switch back at a later point. Such an approach may be useful where it is desirable to accurately model effects as a wave approaches a particular interface, for example.

As an example, a method may commence by considering a wavefield propagating in a reference medium, such that it is a solution to the relation of Equation (3):

$$\bar{q}_i = \bar{L}\bar{q}_{i-1} + \bar{M}\bar{q}_{i-2} \quad (3)$$

Given the relation of Equation (3), a method can then define the scattered wavefield at time-step *j* that is the difference between true and reference operators acting on the reference wavefield at that time-step, for example, as shown in Equation (4):

$$\Delta q^{(j)} = (L - \bar{L})\bar{q}_{j-1} + (M - \bar{M})\bar{q}_{j-2} \quad (4)$$

As an example, a method may use a scheme where such a scattered field is then propagated using the true time-stepping operator for the next *n* time-steps, after which propagation switches back to the reference propagator, for example, as indicated in Equation (5):

$$\Delta q_i^{(j)} = \begin{cases} 0 & \text{for } j > i \\ \Delta q^{(j)} & \text{for } j = i \\ L\Delta q_{i-1}^{(j)} + M\Delta q_{i-2}^{(j)} & \text{for } j < i < j + n \\ \bar{L}\Delta q_{i-1}^{(j)} + \bar{M}\Delta q_{i-2}^{(j)} & \text{for } i \geq j + n \end{cases} \quad (5)$$

In such an approach, a method can generate a wavefield that will correct the errors due to a component of the true wavefield that starts to diverge from the reference wavefield at time-step *j*. Such a method can sum these components from each time-step together to make a full correction wavefield, as shown in Equation (6):

$$\Delta q_i^{\Sigma} = \sum_{j=0}^{i} \Delta q_i^{(j)} \quad (6)$$

As an example, if a reference wavefield is equal to the true wavefield prior to a time *k,* then a correction term can be exact for at least the next *n* time-steps. For example, if $\bar{q}_i = q_i$ for *i* < *k*, then $\bar{q}_i + \Delta q_i^{\Sigma} = q_i$ for *i* < *k* + *n*. Such an approach can be demonstrated by induction. For example, the corrected wavefield for the *k*th time-step can be given by Equation (7):

$$\bar{q}_k + \Delta q_k^{\Sigma} = \bar{q}_k + \Delta q_k^{(k)} \quad (7)$$
$$= \bar{q}_k + L\bar{q}_{k-1} - \bar{L}\bar{q}_{k-1} + M\bar{q}_{k-2} - \bar{M}\bar{q}_{k-2}$$
$$= L\bar{q}_{k-1} + M\bar{q}_{k-2} + (\bar{q}_k - \bar{L}\bar{q}_{k-1} - \bar{M}\bar{q}_{k-2})$$
$$= Lq_{k-1} + Mq_{k-2}$$
$$= q_k$$

Next, consider the sum $\Delta q_{i+1}^{\Sigma}$ for *k* < *i* < *k* + *n,* as in Equation (8):

$$\Delta q_{i+1}^{\Sigma} = \sum_{j=k}^{i+1} \Delta q_{i+1}^{(j)} \ (8)$$

$$= \Delta q_{i+1}^{(i+1)} + \sum_{j=k}^{i} \Delta q_{i+1}^{(j)}$$

$$= \Delta q_{i+1}^{(i+1)} + \sum_{j=k}^{i} \left( L \Delta q_i^{(j)} + M \Delta q_{i-1}^{(j)} \right)$$

$$= \Delta q_{i+1}^{(i+1)} + L \sum_{j=k}^{i} \Delta q_i^{(j)} + M \sum_{j=k}^{i-1} \Delta q_{i-1}^{(j)} + \Delta q_{i-1}^{(i)}$$

$$= \Delta q_{i+1}^{(i+1)} + L \Delta q_i^{\Sigma} + M \Delta q_{i-1}^{\Sigma}$$

If the correction is exact for the $i^{th}$ time-step, a method can compute the corrected wavefield for the $(i + 1)^{th}$ time-step, which is also exact, as shown in Equation (9):

$$\bar{q}_{i+1} + \Delta q_{i+1}^{\Sigma} = \bar{q}_{i+1} + \Delta q_{i+1}^{(i+1)} + L \Delta q_i^{\Sigma} + M \Delta q_{i-1}^{\Sigma} \ (9)$$

$$= \bar{q}_{i+1} + (L - \bar{L})\bar{q}_i + (M - \bar{M})\bar{q}_{i-1} + L(q_i - \bar{q}_i) + M(q_{i-1} - \bar{q}_{i-1})$$

$$= L q_i + M q_{i-1}$$

$$= q_{i+1}$$

As an example, by lowering $n$, a method can restrict the amount of time the wavefield can interact with the true model. This means a method can allow for short-path (intrinsic-attenuation-type) interactions, while removing their longer-path equivalents.

As an example, a method may utilize a direct implementation as explained above where the wavefield at each propagation step can be propagated independently. However, such an approach may be inefficient computationally. As a method may be primarily to generate a sum of correction terms, such a method may optionally operate without propagating independently until the method reaches an end of the simulation. For example, after their $n$ time-steps in the true model, a method can include adding to a single scattered field, and propagated them together in a reference medium. In such an implementation, the method can propagate the reference wavefield, the scattered wavefield, and the $n$ wavefields that are interacting with the true model at one or more desired points in time. As an example, a method may provide further efficiencies by optionally combining scattered wavefields for adjacent time-steps.

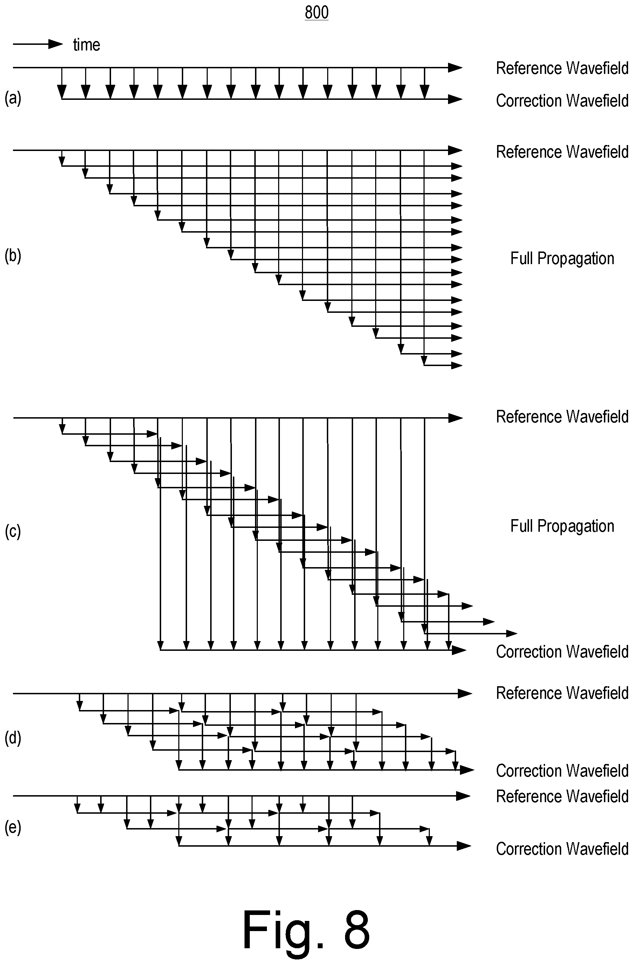

Fig. 8 shows a series of graphics 800, which are labelled (a), (b), (c), (d) and (e). As to the graphic (a), it illustrates how a single-scattering correction (e.g. first-order Born) works within a time-stepping scheme: at each time-step a component of the wavefield is scattered into the correction wavefield which then propagates independently of the reference wavefield. As to the graphic (b), it shows how an "exact" correction scheme would work using Equation (6) for large $n$, although this is not likely something that you would want to do in practice. As to the graphics (c) and (d), they show the correction method with the extended interaction time ($n = 4$) with the graphic (d) illustrating how buffers can be re-used so that only $n$ wavefields need to be propagated in the true medium at any one time. As to the graphic (e), it shows a further optimization that overloads the interaction buffers with contributions from adjacent timesteps so that the number of interaction buffers can be reduced further. To summarize, in Fig. 8, the graphics 800 show wavefield movement: (a) single-scattering modelling (e.g. first-order Born), (b) exact correction method, (c) correction method with extended interaction time (n=4), (d) same as (c) but with buffer re-use, and (e) correction method accumulating two time-steps in each interaction buffer.

As shown in Fig. 8, the first-order Born approach (a) can have relatively low computational demand compared to the exact correction method (b). The examples (c), (d), and (e) can provide for more accurate results than the first-order Born approach (a), with lesser computational demand than the exact correction method (b). Further, the examples of (d) and (e) can have lesser demands than the example of (c).

In the examples of Fig. 8, the total number of time-steps is shown as being less than the total number of time steps of a method, which may be more than 100, more than 1000, etc.

As an example, a method can include propagating a reference wavefield and a (initially empty) summed-correction wavefield in a reference medium. For example, the top lines in the examples (c), (d) and (e) of Fig. 8 represent simulations for propagating a reference wavefield in a reference medium and the bottom lines represent simulations for propagating a summed-correction wavefield in the reference medium, where such simulations are performed for a number of time-steps. In such an example, at each time-step, the method can include computing a correction term from the reference wavefield, where the correction term can be utilized in a new, more accurate simulation, which may be performed for a number of time-steps (e.g., four in the examples (c), (d), and (e)). In Fig. 8, these new simulations are shown as shorter horizontal lines where correction terms are indicated as being dropped down by vertical lines, where the shorter horizontal lines represent individual simulations that may be performed for a limited number of time-steps, which may be equal (e.g., or optionally different). In comparison to the example (b) of the exact correction method, fewer simulations are required in the examples (c), (d), and (e), and hence, lesser computational demand, to obtain results that are more accurate than the first-order Born approach of example (a). As shown in the examples (c), (d), and (e) of Fig. 8, a method can include propagating the correction simulations (shorter horizontal lines) in synchronization with the reference wavefield simulations (top horizontal line) and summed-correction wavefield simulations (bottom horizontal line). As shown, at the beginning, there may be some delay (e.g., a number of time-steps such as four time-steps) before the summed-correction wavefield simulations commence. As shown, after each correction wavefield has propagated for a specific number of time-steps (see short horizontal lines of examples (c), (d), and (e)), the result of the simulation can be added to the summed-correction wavefield for simulation (bottom horizontal line) where each of the correction wavefield simulations (e.g., parallel short horizontal lines) no longer propagates on its own (e.g., each of the small number of time-steps simulations terminate). Again, in comparison to the example (b), exact correction method, the duration of the correction simulations is reduced, which reduces the computational demand. As indicated in Fig. 8, for the examples (c), (d), and (e), the ultimate corrected wavefield is the sum of the reference wavefield (top horizontal line) and the summed-correction wavefield (bottom horizontal line).

As explained, for various seismic imaging applications it is useful to decompose an acoustic (or elastic) model into a (possibly smooth) reference model that controls the traveltime of transmitted events, and perturbation component that scatters/reflects the wavefield. Primaries can then be modelled by a first-order Born approximation which involves simulating a scattered field (top horizontal line in example (a)), by (i) propagating the source wavefield in the reference model, (ii) scattering once from the perturbation component, and then (iii) a further propagation in the reference model (bottom horizontal line in example (a)).

In Fig. 8, the examples (c), (d), and (e), may be considered modified Born process techniques that include simulating a scattered field by propagating, scattering, and propagating. Such techniques can improve accuracy by allowing the scattered wavefield to interact with the true (e.g., reference plus perturbation) model for a finite number of time-steps (see short horizontal lines in the examples (c), (d), and (e) of Fig. 8). As the number of time-steps increases for each of the short horizontal lines in the example of Fig. 8, the accuracy of the modelling increases. As an example, if the number of time-steps is about equal to a seismic wavelength (e.g., which can depend on time-step time, frequency of seismic wave, etc.), then the scattered wavefield will include the effects of thin-layering and scattering attenuation that are not properly accounted for with the first-order Born approximation, but it will not include longer path multiples that cause artifacts in seismic images.

As an example, a number of time-steps for correction term simulations can be determined based on a seismic wavelength. For example, consider a number of time-steps that may be sufficient to be equal to a time period of a quarter of a seismic wavelength. In such an example, a relatively characteristic representation of the seismic wave can be achieved.

In various examples, the duration and total number of time-steps for simulations can be selected for purposes of stability (e.g., a stable simulation and simulation result). As an example, a time-step may be in a range from 0.1 ms to more than 20 ms. As an example, a time-step and/or number of time-steps may depend on one or more stability conditions, a maximum velocity of a propagating wave, etc. While various examples of Fig. 8 show four time-steps for the correction term simulations, a method may employ more than four. As an example, a minimum number of time-steps for correction term simulations can be 2 and a maximum may be 40; noting that a larger number can increase the more computational demand. As explained, a number may be set according to a wave criterion such as, for example, a quarter-wave criterion. As an example, a number of time-steps for correction term simulation may be 2 to 40, 5 or more, 10, from 5 to 10, from 5 to 25, etc.

As an example, a method can include performing quality control and/or validation. For example, consider a method that includes performing a method as in example (a) and a method as in example (b) for baseline comparisons between a first-order Born approximation result and an exact correction result. These baseline examples may be utilized to determine whether to use example (c), example (d) or example (e) of Fig. 8 and to tune one or more parameters (e.g., number of time steps for correction term simulations, etc.). Where a method approaches the exact correction result with substantial improvement over the first-order Born approximation result, that method may be utilized for further processing (e.g., for a larger or other portions of a seismic survey). Such an approach may also account for availability of computational resources and time.

As to Born modelling, with n = 1 in Equation (5), some analogies may be discerned with respect to Born modelling such as, for example, a reference wavefield propagating in the reference medium, a single interaction with the perturbations in the model that pushes this wavefield through into the scattered field, and then the scattered wavefield continuing to propagate in the reference medium once again.

In Born modelling the scattered contribution is:

$$\Delta q^{(j)}_{BORN} = \bar{q}_{j-1} \sum_k \frac{\partial L}{\partial m_k} \Delta m_k + \bar{q}_{j-2} \sum_k \frac{\partial M}{\partial m_k} \Delta m_k$$

where summations are over the medium perturbations ($\Delta m_k$).

Hence, Born modelling can be analogous if the wavefield is linear in the perturbations:

$$L - \bar{L} = \sum_k \frac{\partial L}{\partial m_k} \Delta m_k,$$

and

$$M - \bar{M} = \sum_k \frac{\partial M}{\partial m_k} \Delta m_k$$

However, even for $n$ = 1, aforementioned correction method can model more general single-scattering perturbations as well where the relationship between medium parameters and wavefields is nonlinear, for example, contrasts in density as well as buoyancy.

As an example, an approach may implement an elastic correction technique for correcting the amplitudes of acoustic simulations to match the wave behaviour. However, such an approach may model correction required at a single time-step ($n$ = 1) to match acoustic and elastic wave equations.

As an example, an assumption can be made that the domain and range of the true and reference modelling operators are consistent. However, for elastic modelling, this may not strictly be true, as an elastic medium supports shear stresses that acoustic media do not. For an elastic correction method, this may not be an issue (e.g., acoustic to elastic correction).

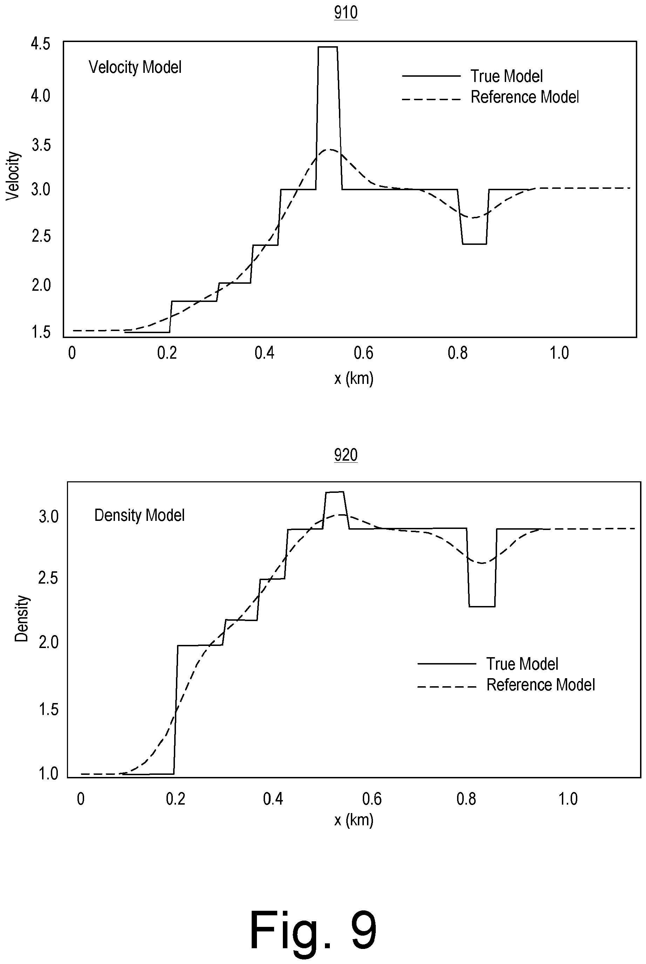

Fig. 9 shows an example of a velocity model 910 (solid line as true model and dashed line as reference) and a density model 920 (solid line as true and dashed line as reference). These examples are for 1D simulations using a 1D coupled 1st order velocity-stress modelling scheme with second-order accuracy in space and time. The maximum frequency is about 40 Hz and the propagation time-step is set to 0.5 ms, which corresponds to about 50 points per period.

In the examples of Fig. 9, each model includes a water layer above a series of sedimentary layers separated by discrete interfaces. Sponge boundaries can be applied at the top and base of the models. As shown, there are two thin layers in the model, one having a high impedance value and another having a low impedance value.

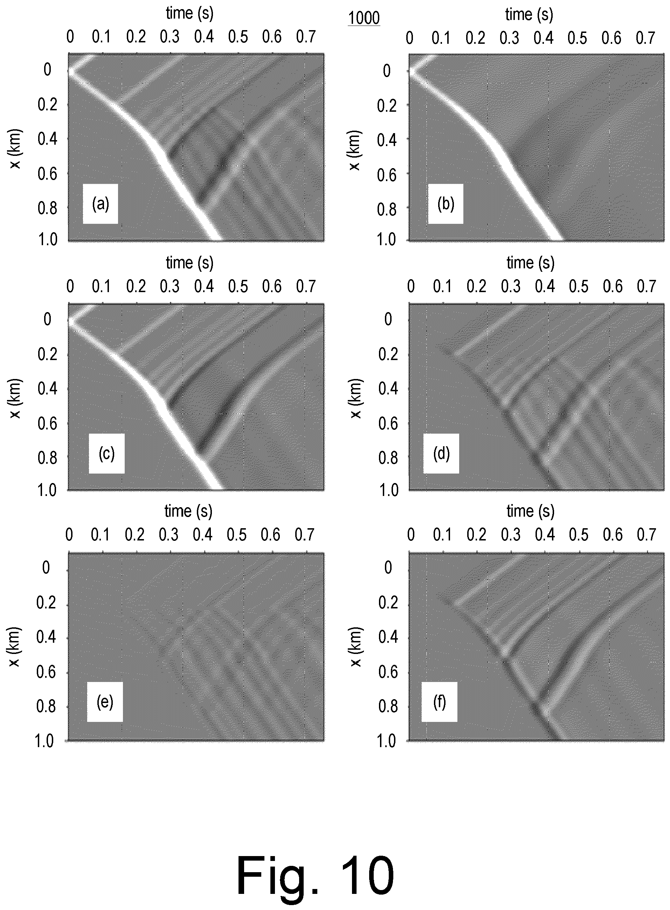

Fig. 10 shows example images 1000 that are wavefields propagating in the given model where the images are labelled (a), (b), (c), (d), (e), and (f) where: (a) true wavefield, (b) reference wavefield, (c) "corrected": reference plus correction (n=50), (d) "scattered": true minus reference, (e) "multiple estimate": true minus "corrected", (f) "primary estimate": "scattered" minus "multiple estimate".

As shown, the reference model is dominated by a direct arrival; however, there is some low frequency scattering too, caused by the smooth interfaces in the model. The "corrected" wavefield shows a good approximation to the true model, but without the multiple scattered events. The "scattered" wavefield contains the difference between the true and the corrected wavefields. The scattered wavefield is present, but there is also some leakage of the direct arrival, due to the inaccurate amplitude modelling in the reference. The "multiple estimate" shows the difference between the true wavefield and the corrected wavefield. This is mostly multiples, but there is some leakage of primaries into this field because the correction's amplitudes are not 100 percent. Additionally, the "primary estimate" looks clean and appears to include only primaries. However, it is apparent that their amplitudes can be slightly off. The strong water bottom event in the model does not help in this example, as it leads to a large error in the direct wave amplitude.

The images 1000 of Fig. 10 demonstrate how the accuracy of the correction is increased by extending the interaction time in the true model. The wavefields in Fig. 10 are generated with n = 50. This means that the modelling here is more than 50 times more expensive than straightforward finite-difference modelling. However, the 50 time-steps corresponds to about half the dominant period. With a more typical parameterization, this is likely to be an order of magnitude lower.

Fig. 11 shows images 1100 that are labelled (a), (b), (c) and (d) where each is a corrected wavefield with: (a) n=1, (b) n=5, (c) n=20, and (d) n=50. The period of the maximum and dominant frequencies are about 50 and 100 time-steps, respectively.

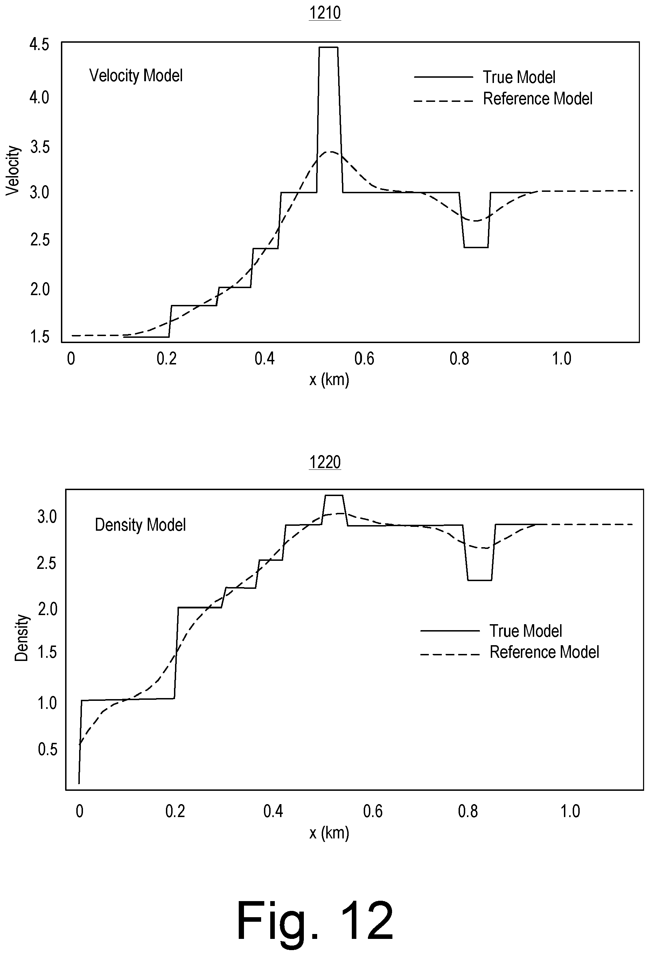

Fig. 12 shows an example velocity model 1210 and an example density model 1220, where solid lines represent the true models and dashed lines represent the reference models. As to convergence issues, for strong contrasts convergence can be slow and non-monotonic. In Fig. 12, the models 1210 and 1220 include a free-surface at 0 km depth.

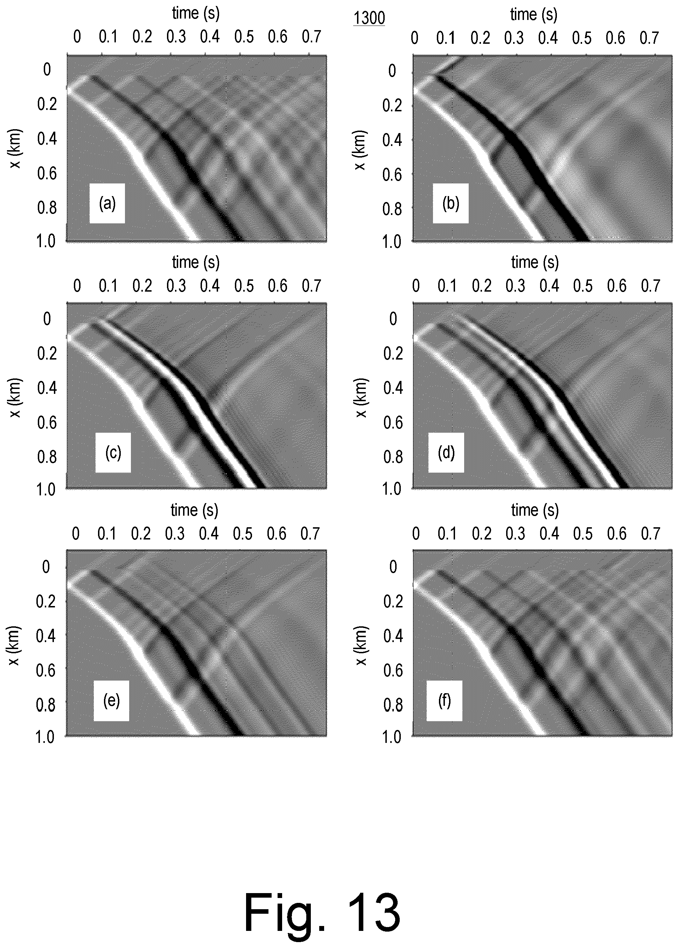

Fig. 13 shows example images 1300, which are labeled (a), (b), (c), (d), (e), and (f) where the true wavefield is shown in image (a) in the model with free surface at x=0 km and source at x=0.1 km and where corrected wavefield images are shown in (b) n=1, (c) n=50, (d) n=100, (e) n=200, and (f) n=1000.

Fig. 13 shows the corresponding corrected wavefields with a source at 0.1 km for different values of n. The correction does eventually converge to the true wavefield; however the error increases initially, and even with n=1000 the corrected wavefield still shows some errors at the end of the record; although these can be eliminated by increasing n further. With increasing n the errors get pushed to later and later times, but the length of the interaction is then much longer than a seismic wavelength. This means the cost of the method can be prohibitive (e.g., not be useful for separating multiples from this kind of interface).

Extending the interaction time in the true model in general improves the accuracy of the correction method, but the convergence is not necessarily monotonic, and errors can grow over the first few iterations if the discrepancy between true and reference wavefields is large.

There are still errors due to inaccuracies in the modelling of the direct arrival, particularly its amplitude. This can lead to inaccuracies in the amplitudes of the scattered wavefields, and leakage of primaries into the multiple estimates. In the example shown, the magnitude of the leakage is similar to the magnitude of the multiply-scattered events.

As an example, a method such as, for example, the method of Fig. 7 can provide for acoustic/elastic correction.

As an example, a method can be utilized for directional separation to get a better transmitted wavefield. As an example, a method can allow for a reduction in the cost of a correction term by limiting the spatial extent of the correction. In such an example, higher accuracy correction terms could be propagated in smaller spatial volumes than the reference and summed-correction wavefield, for example in areas surrounding strong contrast interfaces.

Fig. 14 shows an example of a method 1400 and an example of a system 1460, which may be utilized for performing at least a portion of the method 1400. As shown in Fig. 14, the method 1400 can include a reception block 1404 for receiving seismic data from a seismic survey of a subsurface geologic environment, where, in the seismic data, seismic energy reflections represent events associated with structures in the subsurface geologic environment; a performance block 1408 for performing reference wavefield simulations of a reference wavefield, based on a reference model of the subsurface geologic environment for traveltimes of the events; a pass block 1412 for, for each time-step of the reference wavefield simulations, passing a reference wavefield simulation result to a correction term simulation that utilizes a limited number of time-steps to generate a correction term simulation result; a pass block 1416 for, after the limited number of time-steps, passing the correction term simulation result to a summed-correction wavefield simulation to generate a summed-correction wavefield result; a generation block 1420 for generating a corrected wavefield as a sum of a final reference wavefield simulation result and a final summed-correction wavefield simulation result; and an output block 1424 for outputting a seismic image based on the corrected seismic wavefield, where the corrected seismic wavefield improves accuracy of the structures in the subsurface geologic environment.

The method 1400 is shown in Fig. 14 in association with various computer-readable media (CRM) blocks 1405, 1409, 1413, 1417, 1421, and 1425. Such blocks generally include instructions suitable for execution by one or more processors (or cores) to instruct a computing device or system to perform one or more actions. While various blocks are shown, a single medium may be configured with instructions to allow for, at least in part, performance of various actions of the method 1400 (e.g., using the computing system 1460, etc.). A computer-readable medium (CRM) may be a computer-readable storage medium that is not a carrier wave, that is not a signal and that is non-transitory.

Fig. 14 shows the computing system 1460 as including one or more information storage devices 1462, one or more computers 1464, one or more network interfaces 1470 and instructions 1480. As to the one or more computers 1464, each computer may include one or more processors (or processing cores) 1466 and memory 1468 for storing instructions executable by at least one of the one or more processors. A computer may include one or more network interfaces (wired or wireless), one or more graphics cards, a display interface (wired or wireless), etc. A system may include one or more display devices (optionally as part of a computing device, etc.). Memory can be a computer-readable storage medium. A computer-readable storage medium is not a carrier wave, is not a signal and is non-transitory.

Fig. 15 shows an example of a computational framework 1500 that can include one or more processors and memory, as well as, for example, one or more interfaces. The blocks of the computational framework 1500 may be provided as instructions such as the instructions 780 of the system 760 of Fig. 7, the instructions 1480 of the system 1460 of Fig. 14, etc. The computational framework of Fig. 15 can include one or more features of the OMEGA framework, which includes finite difference modelling (FDMOD) features for two-way wavefield extrapolation modelling, generating synthetic shot gathers with and without multiples. The FDMOD features can generate synthetic shot gathers by using full 3D, two-way wavefield extrapolation modelling, which can utilize wavefield extrapolation logic matches that are used by reverse-time migration (RTM). A model may be specified on a dense 3D grid as velocity and optionally as anisotropy, dip, and variable density.

As shown in Fig. 15, the computational framework 1500 includes features for RTM, FDMOD, adaptive beam migration (ABM), Gaussian packet migration (Gaussian PM), depth processing (e.g., Kirchhoff prestack depth migration (KPSDM), tomography (Tomo)), time processing (e.g., Kirchhoff prestack time migration (KPSTM), general surface multiple prediction (GSMP), extended interbed multiple prediction (XIMP)), framework foundation features, desktop features (e.g., GUIs, etc.), and development tools.

The framework 1500 can include features for geophysics data processing. The framework 1500 can allow for processing various types of data such as, for example, one or more of: land, marine, and transition zone data; time and depth data; 2D, 3D, and 4D surveys; isotropic and anisotropic (TTI and VTI) velocity fields; and multicomponent data.

The framework 1500 can allow for transforming seismic, electromagnetic, microseismic, and/or vertical seismic profile (VSP) data into actionable information, for example, to perform one or more actions in the field for purposes of resource production, etc. The framework 1500 can extend workflows into reservoir characterization and earth modelling. For example, the framework 1500 can extend geophysics data processing into reservoir modelling by integrating with the PETREL framework via the Earth Model Building (EMB) tools, which enable a variety of depth imaging workflows, including model building, editing and updating, depth-tomography QC, residual moveout analysis, and volumetric common-image-point (CIP) pick QC. Such functionalities, in conjunction with depth tomography and migration algorithms of the framework 1500 can produce accurate and precise images of the subsurface. The framework 1500 may provide support for field to final imaging, to prestack seismic interpretation and quantitative interpretation, from exploration to development.

As an example, the FDMOD component can be instantiated via one or more CPUs and/or one or more GPUs for one or more purposes. For example, consider utilizing the FDMOD for generating synthetic shot gathers by using full 3D, two-way wavefield extrapolation modelling, the same wavefield extrapolation logic matches that are used by RTM. FDMOD can model various aspects and effects of wave propagation. The output from FDMOD can be or include synthetic shot gathers including direct arrivals, primaries, surface multiples, and interbed multiples. The model can be specified on a dense 3D grid as velocity and optionally as anisotropy, dip, and variable density. As an example, survey designs can be modelled to ensure quality of a seismic survey, which may account for structural complexity of the model. Such an approach can enable evaluation of how well a target zone will be illuminated. Such an approach may be part of a quality control process (e.g., task) as part of a seismic workflow. As an example, a FDMOD approach may be specified as to size, which may be model size (e.g., a grid cell model size). Such a parameter can be utilized in determining resources to be allocated to perform a FDMOD related processing task. For example, a relationship between model size and CPUs, GPUs, etc., may be established for purposes of generating results in a desired amount of time, which may be part of a plan (e.g., a schedule) for a seismic interpretation workflow.

As an example, as survey data become available, interpretation tasks may be performed for building, adjusting, etc., one or more models of a geologic environment. For example, consider a vessel that transmits a portion of acquired data while at sea and that transmits a portion of acquired data while in port, which may include physically offloading one or more storage devices and transporting such one or more storage devices to an onshore site that includes equipment operatively coupled to one or more networks (e.g., cable, etc.). As data are available, options exist for tasks to be performed.

As an example, the framework 1500 can include one or more sets of instructions executable to perform one or more methods such as, for example, one or more of the methods 700, 1400, etc.

As an example, a method can include receiving seismic data from a seismic survey of a subsurface geologic environment, where, in the seismic data, seismic energy reflections represent events associated with structures in the subsurface geologic environment; performing reference wavefield simulations of a reference wavefield, based on a reference model of the subsurface geologic environment for traveltimes of the events; for each time-step of the reference wavefield simulations, passing a reference wavefield simulation result to a correction term simulation that utilizes a limited number of time-steps to generate a correction term simulation result; after the limited number of time-steps, passing the correction term simulation result to a summed-correction wavefield simulation to generate a summed-correction wavefield result; generating a corrected wavefield as a sum of a final reference wavefield simulation result and a final summed-correction wavefield simulation result; and outputting a seismic image based on the corrected seismic wavefield, where the corrected seismic wavefield improves accuracy of the structures in the subsurface geologic environment.

As an example, a method can include receiving seismic data from a seismic survey of a subsurface geologic environment, where, in the seismic data, seismic energy reflections represent events associated with structures in the subsurface geologic environment; performing reference wavefield simulations of a reference wavefield, based on a reference model of the subsurface geologic environment for traveltimes of the events; for each time-step of the reference wavefield simulations, passing a reference wavefield simulation result to a correction term simulation that utilizes a limited number of time-steps to generate a correction term simulation result; after the limited number of time-steps, passing the correction term simulation result to a summed-correction wavefield simulation to generate a summed-correction wavefield result; generating a corrected wavefield as a sum of a final reference wavefield simulation result and a final summed-correction wavefield simulation result; and outputting a seismic image based on the corrected seismic wavefield, where the corrected seismic wavefield improves accuracy of the structures in the subsurface geologic environment. In such an example, the limited number of time-steps can depend on a characteristic of a wave in the subsurface geologic environment. For example, consider the characteristic as being a quarter of a wavelength of the wave. Or, for example, consider a range from an eighth of a wavelength to half of a wavelength. In various examples, a full wavelength may be considered; however, a full wavelength may result in additional computational demand. Thus, were computational efficiency is desired, less than a full wavelength may be considered (e.g., a fraction of a wavelength).

As an example, a limited number of time-steps can be greater than two and less than 40. As an example, a limited number of time-steps can be greater than 4 and less than 20.

As an example, performing reference wavefield simulations can include performing reference wavefield simulations for more than 100 time-steps.

As an example, a method can include performing a number of the correction term simulations in parallel (see, e.g., examples (c), (d) and (e) of Fig. 8). In such an example, each of the number of the correction term simulations performed in parallel can be offset from one another by a single time-step (see, e.g., examples (c) and (d) of Fig. 8) or, for example, each of the number of the correction term simulations performed in parallel can be offset from one another by more than a single time-step (see, e.g., example (e) of Fig. 8).

As an example, a summed-correction wavefield simulation can commence after a first simulation of reference wavefield simulations.

As an example, a method can include, for two successive time-steps of reference wavefield simulations, passing a first reference wavefield simulation result to a first correction term simulation and passing a second reference wavefield simulation result to a second, different correction term simulation (see, e.g., examples (c) and (d) of Fig. 8).

As an example, a method can include, for a number of successive time-steps of reference wavefield simulations, passing each reference wavefield simulation result to a different correction term simulation (see, e.g., examples (c) and (d) of Fig. 8).

As an example, a method can include, for each time-step of the reference wavefield simulations, performing an instance of the correction term simulation (see, e.g., examples (c) and (d) of Fig. 8). In such an example, the performing an instance of the correction term simulation can include performing a number of instances in parallel, optionally where the number of instances in parallel is greater than the limited number of time-steps, or optionally where the number of instances in parallel is equal to the limited number of time-steps.

As an example, a method can include, for a number of a limited number of time-steps greater than one of the reference wavefield simulations, performing an instance of a correction term simulation, where the performing an instance of the correction term simulation includes performing a number of instances in parallel. In such an example, the number of instances in parallel can be less than the limited number of time-steps.

As an example, a system can include a processor; memory operatively coupled to the processor; and processor-executable instructions stored in the memory to instruct the system to: receive seismic data from a seismic survey of a subsurface geologic environment, where, in the seismic data, seismic energy reflections represent events associated with structures in the subsurface geologic environment; perform reference wavefield simulations of a reference wavefield, based on a reference model of the subsurface geologic environment for traveltimes of the events; for each time-step of the reference wavefield simulations, pass a reference wavefield simulation result to a correction term simulation that utilizes a limited number of time-steps to generate a correction term simulation result; after the limited number of time-steps, pass the correction term simulation result to a summed-correction wavefield simulation to generate a summed-correction wavefield result; generate a corrected wavefield as a sum of a final reference wavefield simulation result and a final summed-correction wavefield simulation result; and output a seismic image based on the corrected seismic wavefield, where the corrected seismic wavefield improves accuracy of the structures in the subsurface geologic environment.

As an example, one or more computer-readable storage media can include computer-executable instructions executable to instruct a computing system to: receive seismic data from a seismic survey of a subsurface geologic environment, where, in the seismic data, seismic energy reflections represent events associated with structures in the subsurface geologic environment; perform reference wavefield simulations of a reference wavefield, based on a reference model of the subsurface geologic environment for traveltimes of the events; for each time-step of the reference wavefield simulations, pass a reference wavefield simulation result to a correction term simulation that utilizes a limited number of time-steps to generate a correction term simulation result; after the limited number of time-steps, pass the correction term simulation result to a summed-correction wavefield simulation to generate a summed-correction wavefield result; generate a corrected wavefield as a sum of a final reference wavefield simulation result and a final summed-correction wavefield simulation result; and output a seismic image based on the corrected seismic wavefield, where the corrected seismic wavefield improves accuracy of the structures in the subsurface geologic environment.

As an example, a computer program product can include computer-executable instructions to instruct a computing system to perform a method, for example, consider a method such as the method 700 of Fig. 7, the method 1400 of Fig. 14, etc.

Fig. 16 shows components of a computing system 1600 and a networked system 1610 that includes a network 1620. The system 1600 includes one or more processors 1602, memory and/or storage components 1604, one or more input and/or output devices 1606 and a bus 1608. Instructions may be stored in one or more computer-readable media (memory/storage components 1604). Such instructions may be read by one or more processors (see the processor(s) 1602) via a communication bus (see the bus 1608), which may be wired or wireless. The one or more processors may execute such instructions to implement (wholly or in part) one or more attributes (as part of a method). A user may view output from and interact with a process via an I/O device (see the device 1606). A computer-readable medium may be a storage component such as a physical memory storage device such as a chip, a chip on a package, a memory card, etc. (a computer-readable storage medium).

Components may be distributed, such as in the network system 1610. The network system 1610 includes components 1622-1, 1622-2, 1622-3, ... 1622-N. The components 1622-1 may include the processor(s) 1602 while the component(s) 1622-3 may include memory accessible by the processor(s) 1602. Further, the component(s) 1622-2 may include an I/O device for display and optionally interaction with a method. The network may be or include the Internet, an intranet, a cellular network, a satellite network, etc.

A device may be a mobile device that includes one or more network interfaces for communication of information. A mobile device may include a wireless network interface (operable via IEEE 802.11, ETSI GSM, BLUETOOTH®, satellite, etc.). A mobile device may include components such as a main processor, memory, a display, display graphics circuitry (optionally including touch and gesture circuitry), a SIM slot, audio/video circuitry, motion processing circuitry (accelerometer, gyroscope), wireless LAN circuitry, smart card circuitry, transmitter circuitry, GPS circuitry, and a battery. A mobile device may be configured as a cell phone, a tablet, etc. A method may be implemented (wholly or in part) using a mobile device. A system may include one or more mobile devices.

A system may be a distributed environment such as a so-called "cloud" environment where various devices, components, etc. interact for purposes of data storage, communications, computing, etc. A device or a system may include one or more components for communication of information via one or more of the Internet (where communication occurs via one or more Internet protocols), a cellular network, a satellite network, etc. A method may be implemented in a distributed environment (wholly or in part as a cloud-based service).

Information may be input from a display (consider a touchscreen), output to a display or both. Information may be output to a projector, a laser device, a printer, etc. such that the information may be viewed. Information may be output stereographically or holographically. As to a printer, consider a 2D or a 3D printer. A 3D printer may include one or more substances that can be output to construct a 3D object. Data may be provided to a 3D printer to construct a 3D representation of a subterranean formation. Layers may be constructed in 3D (horizons, etc.), geobodies constructed in 3D, etc. Holes, fractures, etc., may be constructed in 3D (as positive structures, as negative structures, etc.).

Although only a few example embodiments have been described in detail above, those skilled in the art will readily appreciate that many modifications are possible in the example embodiments. Accordingly, all such modifications are intended to be included within the scope of this disclosure as defined in the following claims. In the claims, means-plus-function clauses are intended to cover the structures described herein as performing the recited function and not only structural equivalents, but also equivalent structures. Thus, although a nail and a screw may not be structural equivalents in that a nail employs a cylindrical surface to secure wooden parts together, whereas a screw employs a helical surface, in the environment of fastening wooden parts, a nail and a screw may be equivalent structures.

**Claims**

1. A method comprising:

    receiving seismic data from a seismic survey of a subsurface geologic environment, wherein, in the seismic data, seismic energy reflections represent events associated with structures in the subsurface geologic environment;

    performing reference wavefield simulations of a reference wavefield, based on a reference model of the subsurface geologic environment for traveltimes of the events;

    for each time-step of the reference wavefield simulations, passing a reference wavefield simulation result to a correction term simulation that utilizes a limited number of time-steps to generate a correction term simulation result;

    after the limited number of time-steps, passing the correction term simulation result to a summed-correction wavefield simulation to generate a summed-correction wavefield result;

    generating a corrected wavefield as a sum of a final reference wavefield simulation result and a final summed-correction wavefield simulation result; and

    outputting a seismic image based on the corrected seismic wavefield, wherein the corrected seismic wavefield improves accuracy of the structures in the subsurface geologic environment.

2. The method of claim 1, wherein the limited number of time-steps depends on a characteristic of a wave in the subsurface geologic environment.

3. The method of claim 2, wherein the characteristic is a quarter of a wavelength of the wave.

4. The method of any one of the preceding claims, wherein the limited number of time-steps is greater than two and less than 40 and/or wherein the limited number of time-steps is greater than 4 and less than 20.

5. The method of any one of the preceding claims, wherein the performing reference wavefield simulations includes performing reference wavefield simulations for more than 100 time-steps.

6. The method of any one of the preceding claims, comprising performing a number of the correction term simulations in parallel.

7. The method of claim 6, wherein each of the number of the correction term simulations performed in parallel are offset from one another by a single time-step or wherein each of the number of the correction term simulations performed in parallel are offset from one another by more than a single time-step.

8. The method of any one of the preceding claims, wherein the summed-correction wavefield simulation commences after a first one of the reference wavefield simulations.

9. The method of any one of the preceding claims, comprising, for two successive time-steps of the reference wavefield simulations, passing a first reference wavefield simulation result to a first correction term simulation and passing a second reference wavefield simulation result to a second, different correction term simulation.

10. The method of any one of the preceding claims, comprising, for a number of successive time-steps of the reference wavefield simulations, passing each reference wavefield simulation result to a different correction term simulation.

11. The method of any one of the preceding claims, comprising, for each time-step of the reference wavefield simulations, performing an instance of the correction term simulation.

12. The method of claim 11, wherein the performing an instance of the correction term simulation includes performing a number of instances in parallel, wherein the number of instances in parallel preferably is greater than the limited number of time-steps or wherein the number of instances in parallel is equal to the limited number of time-steps.

13. The method of any one of the preceding claims, comprising, for a number of the limited number of time-steps greater than one of the reference wavefield simulations, performing an instance of the correction term simulation, wherein the performing an instance of the correction term simulation includes performing a number of instances in parallel, wherein the number of instances in parallel preferably is less than the limited number of time-steps.

**14.** A system comprising:

a processor;
memory operatively coupled to the processor; and
processor-executable instructions stored in the memory to instruct the system to perform the method according to any one of the preceding claims.

**15.** One or more computer-readable storage media comprising computer-executable instructions executable to instruct a computing system to perform the method according to any one of the claims 1 - 13.

Geologic Environment 100

Fig. 1

Fig. 2

Fig. 3

Fig. 4

Forward Modeling 510

Inversion 530

# Fig. 5

Method 600

```
┌─────────────────────────────────────────┐
│   Provide Initial Model & Selected Wavelet │
│                   610                     │
└─────────────────────────────────────────┘
                    │
                    ▼
┌─────────────────────────────────────────┐
│           Generate Synthetic Data         │◄─────┐
│                   620                     │      │
└─────────────────────────────────────────┘      │
                    │                             │
                    ▼                             │
┌─────────────────────────────────────────┐      │
│       Compare Field Data to Synthetic Data │      │
│                   630                     │      │
└─────────────────────────────────────────┘      │
                    │                    ┌─────────────────┐
                    ▼                    │   Iterate Until   │
┌─────────────────────────────────────────┐  │   Convergence     │
│             Compute Gradient              │  │  Criterion Met    │
│                   640                     │  │       670         │
└─────────────────────────────────────────┘  └─────────────────┘
                    │                             │
                    ▼                             │
┌─────────────────────────────────────────┐      │
│           Perform Line Search             │      │
│                   650                     │      │
└─────────────────────────────────────────┘      │
                    │                             │
                    ▼                             │
┌─────────────────────────────────────────┐      │
│              Update Model                 │──────┘
│                   660                     │
└─────────────────────────────────────────┘
```

# Fig. 6

Method 700

Propagating a reference wavefield and
a (initially empty) summed-correction wavefield in a reference medium
704

705

Computing, at each time-step, a correction term from the reference wavefield
708

709

Performing a correction simulation using the correction term as a source
712

713

Propagating the correction simulation in a synchronized manner
with the reference and summed-correction wavefields
716

717

After each correction wavefield has propagated for a specific number of time-steps,
adding it to the summed-correction wavefield, and no longer propagate it on its own
720

721

Outputting a corrected wavefield as a sum of the reference
and summed-correction wavefield
724

725

Computing System 760    Storage 762    Computer(s) 764    Network(s) 770

Processor(s) 766    Memory 768    Instructions 780

Fig. 7

800

Fig. 8

Fig. 9

Fig. 10

Method 1100

Fig. 11

1210

Velocity Model

1220

Density Model

# Fig. 12

Fig. 13

Method <u>1400</u>

Receive seismic data from a seismic survey of a subsurface geologic environment, where, in the seismic data, seismic energy reflections represent events associated with structures in the subsurface geologic environment
<u>1404</u>

1405

Perform reference wavefield simulations of a reference wavefield, based on a reference model of the subsurface geologic environment for traveltimes of the events
<u>1408</u>

1409

For each time-step of the reference wavefield simulation, pass a reference wavefield simulation result to a correction term simulation that utilizes a limited number of time-steps to generate a correction term simulation result
<u>1412</u>

1413

After the limited number of time-steps, pass the correction term simulation result to a summed-correction wavefield simulation to generate a summed-correction wavefield result
<u>1416</u>

1417

Generate a corrected wavefield as a sum of a final reference wavefield simulation result and a final summed-correction wavefield simulation result
<u>1420</u>

1421

Output a seismic image based on the corrected seismic wavefield, where the corrected seismic wavefield improves accuracy of the structures in the subsurface geologic environment
<u>1424</u>

1425

Computing System <u>1460</u>

Storage <u>1462</u>

Computer(s) <u>1464</u>

Processor(s) <u>1466</u>

Memory <u>1468</u>

Network(s) <u>1470</u>

Instructions <u>1480</u>

# Fig. 14

Framework 1500

RTM

FDMOD

ABM

Gaussian PM

Depth Pack

KPSDM

Tomo

Other(s)

Time Pack

KPSTM

GSMP

XIMP

Foundation

Desktop

Development Tools (e.g., SDK, etc.)

# Fig. 15

System Components 1600

Processor(s)
1602

Memory/Storage
1604

Bus 1608

I/O Device 1606

Network System 1610

Component(s)
1622-1

Component(s)
1622-2

Network
1620

Component(s)
1622-3

Component(s)
1622-N

# Fig. 16

**EUROPEAN SEARCH REPORT**

Europäisches
Patentamt
European
Patent Office
Office européen
des brevets

Application Number

EP 24 18 2211

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FEI TONG ET AL: "Elimination of numerical dispersion in finite-difference modeling and migration by flux-corrected transport", GEOPHYSICS, vol. 60, no. 6, 1 November 1995 (1995-11-01), pages 1830-1842, XP093207049, US ISSN: 0016-8033, DOI: 10.1190/1.1443915 | 1,4-15 | INV. G01V1/28 G01V1/36 |
| Y | * figures 9-12, 20, 22 * * Section 1-D modeling, pages 1832-1835 * * Section Modeling in a thin-layered medium, pages 1837-1838 * * Section Migration of field data, page 1838 * * Section CONCLUSIONS * * Appendix * ----- | 2,3 | |
| Y | US 2020/041675 A1 (PEDERSEN ØRJAN [NO] ET AL) 6 February 2020 (2020-02-06) * paragraph [0054] * ----- | 2,3 | |

TECHNICAL FIELDS SEARCHED (IPC)

G01V

The present search report has been drawn up for all claims

| Place of search | Date of completion of the search | Examiner |
|---|---|---|
| The Hague | 26 September 2024 | Lameloise, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 2211

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2024

| Patent document cited in search report | Publication date | Patent family member(s) | Publication date |
|---|---|---|---|
| US 2020041675 A1 | 06-02-2020 | BR 112019006688 A2 | 25-06-2019 |
| | | GB 2554865 A | 18-04-2018 |
| | | US 2020041675 A1 | 06-02-2020 |
| | | WO 2018067014 A1 | 12-04-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63508316